(19) Europäisches Patentamt
European Patent Office
Office européen des brevets

(11) EP 4 738 518 A1

(12) **EUROPEAN PATENT APPLICATION**
published in accordance with Art. 153(4) EPC

(43) Date of publication:
**06.05.2026 Bulletin 2026/19**

(21) Application number: **24849101.1**

(22) Date of filing: **26.07.2024**

(51) International Patent Classification (IPC):
***H01M 10/0567*** *(2010.01)* ***H01M 10/052*** *(2010.01)*
***H01M 10/054*** *(2010.01)* ***H01M 10/0568*** *(2010.01)*
***H01M 10/0569*** *(2010.01)*

(52) Cooperative Patent Classification (CPC):
**H01M 10/052; H01M 10/054; H01M 10/0567; H01M 10/0568; H01M 10/0569;** Y02E 60/10

(86) International application number:
**PCT/JP2024/026842**

(87) International publication number:
**WO 2025/028449 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 JP 2023123779**

(71) Applicant: **Central Glass Company, Limited**
**Ube-shi, Yamaguchi 755-0001 (JP)**

(72) Inventors:
- **ESAKI, Ryota**
  **Tokyo 101-0054 (JP)**
- **YAMAGUCHI, Yukihiro**
  **Tokyo 101-0054 (JP)**
- **TOKOMOTO, Junichi**
  **Tokyo 101-0054 (JP)**
- **KAWABATA, Wataru**
  **Tokyo 101-0054 (JP)**
- **TAKAHASHI, Mikihiro**
  **Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

# (54) NONAQUEOUS ELECTROLYTE SOLUTION AND NONAQUEOUS ELECTROLYTE BATTERY USING SAME

(57) The present disclosure provides a nonaqueous electrolyte solution containing (I) at least one sulfonic anhydride "1" represented by the general formula (1) described in the specification, (11) at least one compound selected from the group consisting of "2", "3", "4", "5", "6", and "7" described in the specification, (III) a solute, and (IV) a nonaqueous organic solvent and a nonaqueous electrolyte solution battery including at least a positive electrode, a negative electrode, a separator, and the nonaqueous electrolyte solution.

EP 4 738 518 A1

## Description

### TECHNICAL FIELD

The present invention relates to a nonaqueous electrolyte solution and a nonaqueous electrolyte solution battery using the same.

### BACKGROUND ART

As measures for improving the durability such as cycle characteristics and high-temperature storage characteristics of a nonaqueous electrolyte solution battery, optimization of various constituting elements of the battery including active materials of a positive electrode and a negative electrode has been hitherto studied. Techniques relating to a nonaqueous electrolyte solution have also been studied, and use of a variety of additives to prevent deterioration of a nonaqueous electrolyte solution at surfaces of active positive and negative electrodes due to decomposition of the nonaqueous electrolyte solution has been proposed.

For example, Patent Literature 1 proposes to improve the cycle characteristic by using a sulfonic anhydride in an electrolyte solution.

Patent Literature 2 proposes to improve the cycle characteristic and the low-temperature characteristic by using a silicon compound in an electrolyte solution.

Patent Literature 3 proposes to improve the storage characteristic by using a nonaqueous electrolyte solution containing lithium bis(fluorosulfonyl)imide as a solute.

Patent Literature 4 proposes to improve the storage characteristic after charging by using lithium monofluorophosphate or lithium difluorophosphate in an electrolyte solution.

Patent Literature 5 proposes to maintain a high input/output characteristic and an impedance characteristic even after a durability test by using a nonaqueous electrolyte solution characterized by containing a fluorosulfonic acid salt.

Patent Literature 6 proposes that the decomposition on the carbon negative electrode due to the progress of the charge and discharge cycle can be suppressed by using a nonaqueous electrolyte solution characterized by containing a cyclic sulfate ester.

Patent Literature 7 proposes that a battery in which deterioration of the load characteristic and the resistance is significantly suppressed and in which the gas generation amount in the battery is low can be obtained by using a nonaqueous electrolyte solution characterized by containing a cyclic sultone (unsaturated sultone).

Patent Literature 8 discloses an electrolyte which contains various oxalato salts and malonato salts and which has high heat resistance and hydrolysis resistance.

Moreover, Patent Literature 9 discloses that a nonaqueous electrolyte solution battery having high-temperature durability is obtained by adding a picolinic acid derivative represented by the general formula (3) in the literature to a nonaqueous electrolyte solution.

### CITATION LIST

### PATENT LITERATURE

Patent Literature 1: JP3760539B
Patent Literature 2: JP3497812B
Patent Literature 3: JP4847675B
Patent Literature 4: JP3439085B
Patent Literature 5: JP5353923B
Patent Literature 6: JP3760540B
Patent Literature 7: JP4190162B
Patent Literature 8: JP3722685B
Patent Literature 9: WO-A1-2016/002774

### SUMMARY OF INVENTION

### TECHNICAL PROBLEM

However, as a result of studies by the present disclosers, it has been found that although the battery

characteristics are certainly improved in the batteries disclosed in the related art documents, there is room for improvement regarding the initial resistance.

The present disclosure has been made in view of the above circumstances, and an object of the present disclosure is to provide a nonaqueous electrolyte solution and a nonaqueous electrolyte solution battery, each of which can reduce the initial resistance value of a battery.

SOLUTION TO PROBLEM

As a result of intensive studies to solve such a problem, the present inventors have found that by adding a specific sulfonic anhydride and at least one selected from the group consisting of a phosphate, a sulfonate, an imide salt, a borate, a picolinic acid derivative, a silicon compound, a cyclic sulfate ester, and a cyclic sultone, each having specific structures to a nonaqueous electrolyte solution for a nonaqueous electrolyte solution battery containing a nonaqueous solvent and a solute, an initial resistance value of the battery can be reduced when the electrolyte solution is used in a nonaqueous electrolyte solution battery, and the present invention has been thus completed.

That is, the present invention is as follows.

[1] A nonaqueous electrolyte solution, containing:

(I) at least one sulfonic anhydride "1" represented by the following general formula (1);
(II) at least one compound selected from the group consisting of "2", "3", "4", "5", "6", and "7" below;
(III) a solute; and
(IV) a nonaqueous organic solvent.

[Chem. 1]

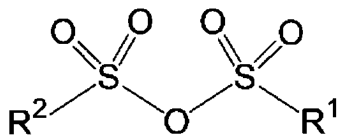

(1)

In the general formula (1), $R^1$ and $R^2$ each independently represent a linear or branched-chain alkyl group having 1 to 6 carbon atoms, a linear or branched-chain alkenyl group having 2 to 10 carbon atoms, or an aryl group which may be substituted with an alkyl group having 6 to 10 carbon atoms. Any hydrogen atom of the alkyl group, the alkenyl group, and the aryl group represented by $R^1$ and $R^2$ may be substituted with a halogen atom.

The "2" is at least one compound selected from the group consisting of compounds represented by the following general formula (2-1) and general formula (2-2).

[Chem. 2]

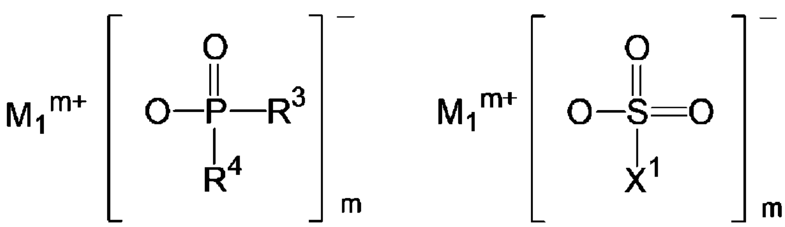

(2-1) (2-2)

In the general formula (2-1), $R^3$ and $R^4$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group. Moreover, the general formula (2-1) includes at least one P-F bond.

In the general formula (2-2), $X^1$ is a fluorine atom or an organic group selected from the group consisting of a linear or branched alkyl group having 1 to 10 carbon atoms, an alkenyl group having 2 to 10 carbon atoms, an alkynyl group

having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. The organic group may contain at least one fluorine atom, and an oxygen atom and/or an unsaturated bond may be present in the organic group.

In the general formula (2-1) and the general formula (2-2), $M_1^{m+}$ is a proton, a metal cation, or an onium cation. m represents a valence of a corresponding cation.

The "3" is at least one compound selected from the group consisting of compounds represented by the following general formula (3-1) to general formula (3-3).

[Chem. 3]

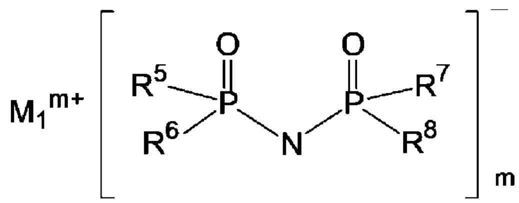

(3-1)

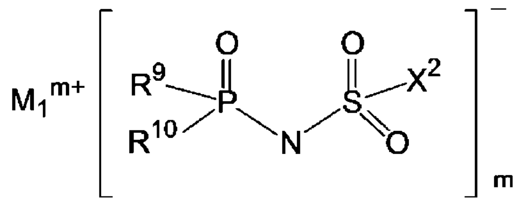

(3-2)

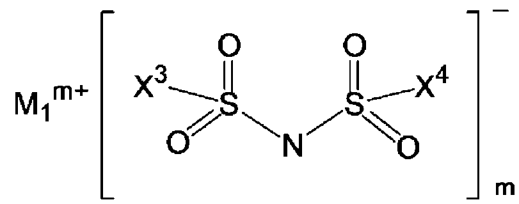

(3-3)

In the general formula (3-1) to the general formula (3-3), $R^5$ to $R^{10}$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group.

$X^2$ to $X^4$ are each independently a fluorine atom or an organic group selected from the group consisting of a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group.

Moreover, the general formulae (3-1) to (3-3) include at least one P-F bond and/or S-F bond.

$M_1^{m+}$ is a proton, a metal cation, or an onium cation. m represents a valence of a corresponding cation.

The "4" is at least one compound selected from the group consisting of a compound represented by the following general formula (4-1) and a compound represented by the following general formula (4-2).

[Chem. 4]

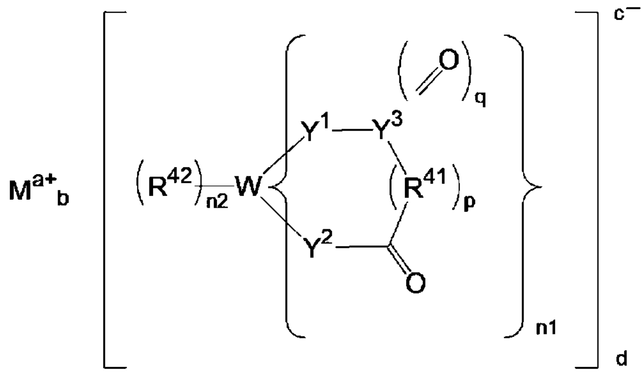

(4-1)

In the general formula (4-1), W represents a boron atom, a phosphorus atom, or a silicon atom. n1 is 0 to 3. n2 is 0 to 4. p is 0 or 1. $R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents a valence of the corresponding cation. a to d are each 1 or 2 and satisfy $a \times b = c \times d$.

[Chem. 5]

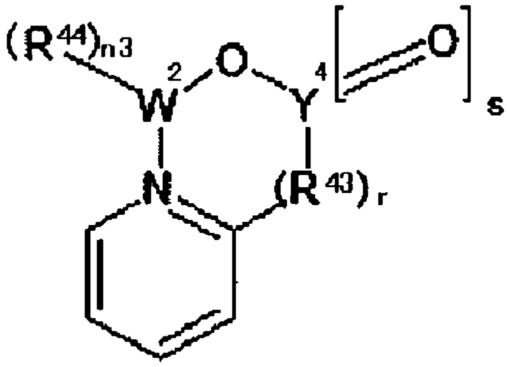

(4 − 2)

In the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof), and r is 0 or 1. $Y^4$ represents a carbon atom or a sulfur atom. s is 1 when $Y^4$ is a carbon atom, and s is 1 or 2 when $Y^4$ is a sulfur atom. $W^2$ represents a boron atom or a phosphorus atom, and $R^{44}$ represents a halogen atom. n3 is 2 when $W^2$ is a boron atom, and n3 is 4 when $W^2$ is a phosphorus atom.

The "5" is at least one compound represented by the following general formula (5).

[Chem. 6]

$$Si(R51)_v(R^{52})_{4-v} \qquad (5)$$

In the general formula (5), $R^{51}$'s each independently represent a group having a carbon-carbon unsaturated bond. When there are a plurality of $R^{52}$'s, $R^{52}$'s each independently represent a fluorine atom or a linear or branched alkyl group having 1 to 10 carbon atoms, and the alkyl group may have at least one of a fluorine atom or an oxygen atom. v represents an integer of 2 to 4.

The "6" is at least one compound represented by the following general formula (6).

[Chem. 7]

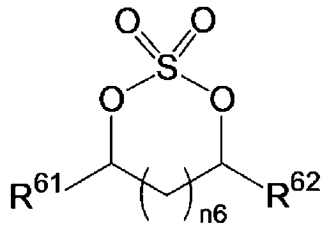

(6)

In the general formula (6), $R^{61}$ and $R^{62}$ each independently represent a hydrogen atom, an alkyl group having 1 or 2 carbon atoms, a linear or branched-chain alkenyl group having 2 to 5 carbon atoms, or an aryl group which may be substituted with an alkyl group having 6 to 10 carbon atoms. Any hydrogen atom of the alkyl group, the alkenyl group, and the aryl group represented by $R^{61}$ and $R^{62}$ may be substituted with a halogen atom. n6 is 0 or 1.

The "7" is at least one compound selected from the group consisting of compounds represented by the following general formula (7-1) and general formula (7-2).

[Chem. 8]

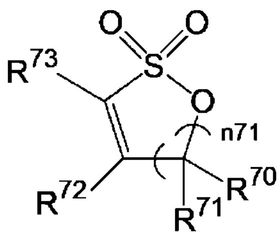

(7-1)

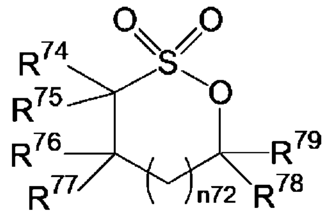

(7-2)

In the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms. n71 represents an integer of 1 to 3.

In the general formula (7-2), $R^{74}$ to $R^{79}$ each independently represent a hydrogen atom, an alkyl group having 1 to 6 carbon atoms, or a fluoroalkyl group having 1 to 4 carbon atoms. n72 represents an integer of 0 to 2.

[2] The nonaqueous electrolyte solution according to [1], in which a content of the (I) with respect to a total amount of the nonaqueous electrolyte solution is 0.01% to 10% by mass.

[3] The nonaqueous electrolyte solution according to [1] or [2], in which a content of the (II) with respect to the total amount of the nonaqueous electrolyte solution is 0.01% to 10% by mass.

[4] The nonaqueous electrolyte solution according to any one of [1] to [3], in which the (I) is at least one selected from the group consisting of methanesulfonic anhydride and ethanesulfonic anhydride.

[5] The nonaqueous electrolyte solution according to any one of [1] to [4], in which the "2" is at least one compound selected from the group consisting of lithium difluorophosphate, lithium fluorosulfonate, and lithium trifluoromethanesulfonate.

[6] The nonaqueous electrolyte solution according to any one of [1] to [5], in which the "3" is at least one compound selected from the group consisting of lithium bis(fluorosulfonyl)imide, lithium (fluorosulfonyl)(difluorophosphoryl) imide, lithium bis(trifluoromethanesulfonyl)imide, lithium bis(difluorophosphoryl)imide, lithium bis(pentafluoroethanesulfonyl)imide, and lithium (fluorosulfonyl)(trifluoromethanesulfonyl)imide.

[7] The nonaqueous electrolyte solution according to any one of [1] to [6], in which the "4" is at least one compound selected from the group consisting of lithium tetrafluoroborate, lithium bis(oxalato)borate, lithium difluoro(oxalato) borate, lithium tris(oxalato)phosphate, lithium difluorobis(oxalato)phosphate, lithium tetrafluoro(oxalato)phosphate, lithium difluoro(malonato)borate, lithium tetrafluoro(malonato)phosphate, a tetrafluoro(picolinato)phosphate, and a difluoro(picolinato)borate.

[8] The nonaqueous electrolyte solution according to any one of [1] to [7], in which the "5" is at least one compound selected from the group consisting of trivinylmethylsilane, trivinylfluorosilane, and tetravinylsilane.

[9] The nonaqueous electrolyte solution according to any one of [1] to [8], in which the "6" is at least one compound selected from the group consisting of 1,3,2-dioxathiolane-2,2-dioxide and 1,3,2-dioxathiane-2,2-dioxide.

[10] The nonaqueous electrolyte solution according to any one of [1] to [9], in which the (III) is at least one selected from

the group consisting of $LiPF_6$, $LiSbF_6$, $LiAsF_6$, $LiClO_4$, $LiAlO_2$, $LiAlCl_4$, LiCl, and LiI or at least one selected from the group consisting of $NaPF_6$, $NaSbF_6$, $NaAsF_6$, $NaClO_4$, $NaAlO_2$, $NaAlCl_4$, NaCl, and NaI.

[11] The nonaqueous electrolyte solution according to any one of [1] to [10], in which the (IV) contains at least one selected from the group consisting of a cyclic ester, a chain ester, a cyclic ether, a chain ether, a sulfone compound, a sulfoxide compound, and an ionic liquid.

[12] The nonaqueous electrolyte solution according to [11], in which the cyclic ester is a cyclic carbonate, and the cyclic carbonate is at least one selected from the group consisting of ethylene carbonate, propylene carbonate, and fluoroethylene carbonate.

[13] The nonaqueous electrolyte solution according to [11], in which the chain ester is a chain carbonate, and the chain carbonate is at least one selected from the group consisting of ethyl methyl carbonate, dimethyl carbonate, diethyl carbonate, and methyl propyl carbonate.

[14] A nonaqueous electrolyte solution battery at least including a positive electrode, a negative electrode, a separator, and the nonaqueous electrolyte solution according to any one of [1] to [13].

## ADVANTAGEOUS EFFECTS OF INVENTION

According to the present disclosure, a nonaqueous electrolyte solution and a nonaqueous electrolyte solution battery, each of which can reduce the initial resistance value of a battery, can be provided.

## DESCRIPTION OF EMBODIMENTS

Configurations and combinations thereof in the following embodiments are merely examples, and additions, replacements, and other changes of the configurations may be made without departing from the scope of the present disclosure. In addition, the present disclosure is not limited by the embodiments, but is only limited by the scope of claims.

The term "to" in the present specification is used with the meanings including the numerical values indicated before and after "to" as a lower limit value and an upper limit value.

### [1. Nonaqueous Electrolyte Solution]

The nonaqueous electrolyte solution of the present disclosure is a nonaqueous electrolyte solution containing

(I) at least one sulfonic anhydride "1" represented by the general formula (1) above,
(II) at least one compound selected from the group consisting of "2", "3", "4", "5", "6", and "7" above,
(III) a solute, and
(IV) a nonaqueous organic solvent.

When the nonaqueous electrolyte solution containing both the component (I) and the component (II) is used in a nonaqueous electrolyte solution battery (for example, a lithium ion secondary battery or a sodium ion secondary battery), the components (I) and (II) decompose on at least one of the positive electrode and the negative electrode and form a film having excellent cationic conductivity on the surface of at least one of the positive electrode and the negative electrode. It is considered that this film prevents direct contact between the nonaqueous organic solvent or the solute and the electrode active material and reduces the cation dissociation energy of the solute. The present inventors presume that, as a result, an effect of reducing the initial resistance value of the nonaqueous electrolyte solution battery is exhibited.

### [Component (I)]

The nonaqueous electrolyte solution of the present disclosure contains at least one sulfonic anhydride "1" represented by the general formula (1), which is the component (I).

[Chem. 9]

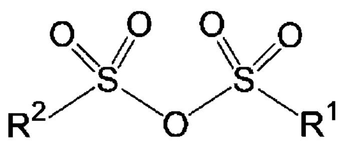

(1)

In the general formula (1), $R^1$ and $R^2$ each independently represent a linear or branched-chain alkyl group having 1 to 6 carbon atoms, a linear or branched-chain alkenyl group having 2 to 10 carbon atoms, or an aryl group which may be

substituted with an alkyl group having 6 to 10 carbon atoms. Any hydrogen atom of the alkyl group, the alkenyl group, and the aryl group represented by $R^1$ and $R^2$ may be substituted with a halogen atom.

When $R^1$ and $R^2$ are each a linear or branched-chain alkyl group having 1 to 6 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, and an n-hexyl group.

When $R^1$ and $R^2$ are each a linear or branched-chain alkenyl group having 2 to 10 carbon atoms, examples of the alkenyl group include a vinyl group, an allyl group, a I-propenyl group, an isopropenyl group, a 2-butenyl group, and a 1,3-butadienyl group.

When $R^1$ and $R^2$ are each an aryl group which may be substituted with an alkyl group having 6 to 10 carbon atoms, examples of the aryl group include a phenyl group, a tolyl group, and a xylyl group.

The number of carbon atoms of 6 to 10 represents the total number of the number of carbon atoms of the aryl group and the number of carbon atoms of the alkyl group when the aryl group is substituted with an alkyl group.

At least any one hydrogen atom of the alkyl group, the alkenyl group, and the aryl group may be substituted with a halogen atom. Examples of the halogen atom include a fluorine atom, a bromine atom, and an iodine atom, and a fluorine atom is preferable.

$R^1$ and $R^2$ are each independently preferably a linear or branched-chain alkyl group having 1 to 6 carbon atoms, more preferably a methyl group, an ethyl group, or an isopropyl group, and further preferably a methyl group or an ethyl group.

It is particularly preferable that both $R^1$ and $R^2$ represent methyl groups or both represent ethyl groups.

That is, the component (I) is preferably at least one selected from the group consisting of methanesulfonic anhydride and ethanesulfonic anhydride.

Specific examples of the sulfonic anhydride represented by the general formula (1) are shown below, but the sulfonic anhydride is not limited thereto.

[Chem. 10]

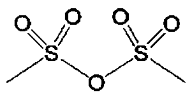
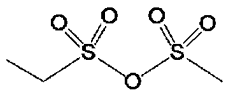

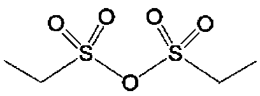
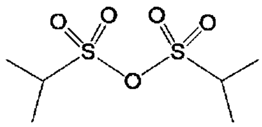

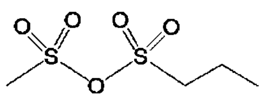
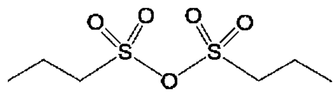

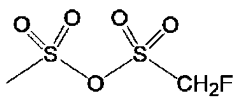
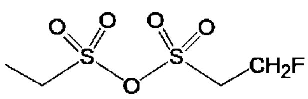

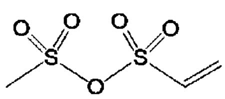
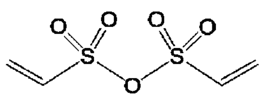

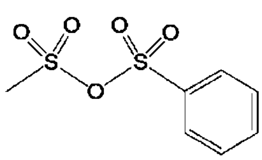
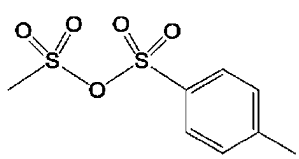

In the nonaqueous electrolyte solution of the present disclosure, the lower limit of the component (I) content with respect to the total amount (100% by mass) of the nonaqueous electrolyte solution (hereinafter also referred to as

"concentration of (I)") may be 0.01% by mass or more, may be 0.05% by mass or more, or may be 0.1% by mass or more. The upper limit of the concentration of (1) may be 10% by mass or less, may be 5% by mass or less, may be 4% by mass or less, or may be 2.5% by mass or less.

By setting the concentration of (I) to 0.01% by mass or more, an effect of preventing an increase in the initial resistance of the nonaqueous electrolyte solution battery using the nonaqueous electrolyte solution and an effect of improving the cycle characteristic are easily obtained. On the other hand, by setting the concentration of (I) to 10% by mass or less, an increase in the viscosity of the nonaqueous electrolyte solution can be prevented, and an effect of preventing an increase in the initial resistance of the nonaqueous electrolyte solution battery using the nonaqueous electrolyte solution is easily obtained.

The component (I) content with respect to the total amount of the nonaqueous electrolyte solution is preferably 0.01% by mass to 10% by mass, and more preferably 0.01 to 5% by mass.

In the nonaqueous electrolyte solution of the present disclosure, one type of compound may be used alone as the component (I), or two or more types of compounds may be mixed and used in any combination and any ratio according to the application.

The sulfonic anhydride represented by the general formula (1) can be produced by a known method.

[Component (II)]

The nonaqueous electrolyte solution of the present disclosure contains at least one compound selected from the group consisting of "2", "3", "4", "5", "6", and "7" below, which is the component (II).

<"2">

"2" is at least one compound selected from the group consisting of compounds represented by the following general formula (2-1) and general formula (2-2).

[Chem. 11]

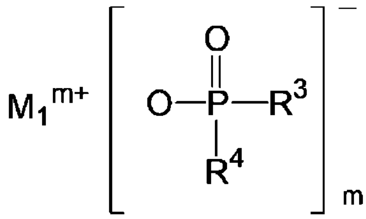

(2-1)

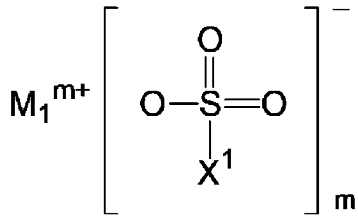

(2-2)

In the general formula (2-1), $R^3$ and $R^4$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group. Moreover, the general formula (2-1) includes at least one P-F bond.

In the general formula (2-2), $X^1$ is a fluorine atom or an organic group selected from the group consisting of a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms. The organic group may contain at least one fluorine atom, and an oxygen atom and/or an unsaturated bond may be present in the organic group.

In the general formula (2-1) and the general formula (2-2), $M_1^{m+}$ is a proton, a metal cation, or an onium cation. m represents a valence of a corresponding cation.

In the general formula (2-1), examples of the alkoxy group represented by $R^3$ and $R^4$ include an alkoxy group and a fluorine-containing alkoxy group, each having 1 to 10 carbon atoms, such as a methoxy group, an ethoxy group, a propoxy group, an isopropoxy group, a butoxy group, a sec-butoxy group, a tert-butoxy group, a pentyloxy group, a

trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

Examples of the alkenyloxy group represented by $R^3$ and $R^4$ include an alkenyloxy group and a fluorine-containing alkenyloxy group, each having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

Examples of the alkynyloxy group represented by $R^3$ and $R^4$ include an alkynyloxy group and a fluorine-containing alkynyloxy group, each having 2 to 10 carbon atoms, such as an ethynyloxy group, a 2-propynyloxy group, and a 1,1-dimethyl-2-propynyloxy group.

Examples of the cycloalkoxy group represented by $R^3$ and $R^4$ include a cycloalkoxy group and a fluorine-containing cycloalkoxy group, each having 3 to 10 carbon atoms, such as a cyclopentyloxy group and a cyclohexyloxy group.

Examples of the cycloalkenyloxy group represented by $R^3$ and $R^4$ include a cycloalkenyloxy group and a fluorine-containing cycloalkenyloxy group, each having 3 to 10 carbon atoms, such as a cyclopentenyloxy group and a cyclohexenyloxy group.

Examples of the aryloxy group represented by $R^3$ and $R^4$ include an aryloxy group and a fluorine-containing aryloxy group, each having 6 to 10 carbon atoms, such as a phenyloxy group, a tolyloxy group, and a xylyloxy group.

$R^3$ and $R^4$ are each independently preferably a fluorine atom or an alkoxy group having a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $R^3$ and $R^4$ preferably have 6 or less carbon atoms. The number of carbon atoms is preferably 6 or less because the ionic conductivity tends to be relatively high.

In the general formula (2-1), $M_1^{m+}$ represents a proton, a metal cation, or an onium cation. The type thereof is not particularly restricted as long as the performance of the nonaqueous electrolyte solution and the nonaqueous electrolyte solution battery of the present invention is not impaired, and various ones can be selected from the above.

When $M_1^{m+}$ represents a metal cation, examples of the metal cation include an alkali metal cation such as a lithium ion, a sodium ion, a potassium ion, a rubidium ion, and a cesium ion, an alkaline earth metal cation such as a magnesium ion, a calcium ion, and a barium ion, a silver ion, a copper ion, and an iron ion.

When $M_1^{m+}$ represents an onium cation, examples of the onium cation include an onium cation such as tetraalkylammonium, tetraalkylphosphonium, and an imidazolium derivative.

$M_1^{m+}$ is preferably a lithium ion, a sodium ion, a potassium ion, a tetramethylammonium ion, a tetraethylammonium ion, a tetrabutylphosphonium ion, or the like particularly from the viewpoint of playing a role of helping the ionic conduction in a nonaqueous electrolyte solution battery.

Moreover, $M_1^{m+}$ is more preferably a lithium ion for use for a lithium ion battery application and is more preferably a sodium ion for use for a sodium ion battery application.

Specific examples of the anion structure of the compound represented by the general formula (2-1) are shown below, but the anion structure is not limited thereto.

[Chem. 12]

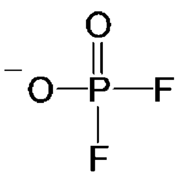

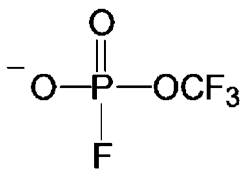

In the general formula (2-2), examples of the alkyl group represented by $X^1$ include an alkyl group and a fluorine-containing alkyl group, each having 1 to 10 carbon atoms, such as a methyl group, an ethyl group, a propyl group, an isopropyl group, a butyl group, a sec-butyl group, a tert-butyl group, a pentyl group, a trifluoromethyl group, a 2,2-difluoroethyl group, 2,2,2-trifluoroethyl group, a 2,2,3,3-tetrafluoropropyl group, and a 1,1,1,3,3,3-hexafluoroisopropyl group.

Examples of the alkenyl group represented by $X^1$ include an alkenyl group and a fluorine-containing alkenyl group, each having 2 to 10 carbon atoms, such as a vinyl group, a 1-propenyl group, a 2-propenyl group, an isopropenyl group, a 2-butenyl group, a 3-butenyl group, and a 1,3-butadienyl group.

Examples of the alkynyl group represented by $X^1$ include an alkynyl group and a fluorine-containing alkynyl group, each having 2 to 10 carbon atoms, such as an ethynyl group, a 2-propynyl group, and a 1,1-dimethyl-2-propynyl group.

Examples of the cycloalkyl group represented by $X^1$ include a cycloalkyl group and a fluorine-containing

cycloalkyl group, each having 3 to 10 carbon atoms, such as a cyclopentyl group and a cyclohexyl group.

Examples of the cycloalkenyl group represented by $X^1$ include a cycloalkenyl group and a fluorine-containing cycloalkenyl group, each having 3 to 10 carbon atoms, such as a cyclopentenyl group and a cyclohexenyl group, and examples of the aryl group represented by $X^1$ include an aryl group and a fluorine-containing aryl group, each having 6 to 10 carbon atoms, such as a phenyl group, a tolyl group, and a xylyl group.

Examples of the alkoxy group, the alkenyloxy group, the alkynyloxy group, the cycloalkoxy group, the cycloalkenyloxy group, and the aryloxy group represented by $X^1$ include the alkoxy group, the alkenyloxy group, the alkynyloxy group, the cycloalkoxy group, the cycloalkenyloxy group, and the aryloxy group represented by $R^3$ and $R^4$ in the general formula (2-1) described above.

In the general formula (2-2), $X^1$ is preferably a fluorine atom or an alkyl group containing a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $X^1$ preferably has 6 or less carbon atoms because the ionic conductivity tends to be relatively high. The number of carbon atoms is more preferably 1 to 4, and the number of carbon atoms is further preferably 1 to 3.

Specific examples thereof include a trifluoromethyl group, a trifluoromethoxy group, and a trifluoroethoxy group, and a trifluoromethyl group, which has a small anion size, is particularly preferable.

In the general formula (2-2), $M_1^{m+}$ has the same meaning as $M_1^{m+}$ in the general formula (2-1), and preferable examples thereof are also the same.

Specific examples of the anion structure of the compound represented by the general formula (2-2) are shown below, but the anion structure is not limited thereto.

[Chem. 13]

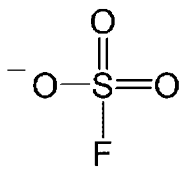 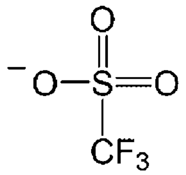 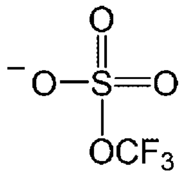 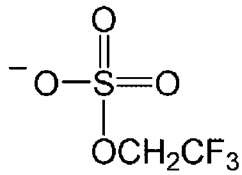

"2" is preferably at least one compound selected from the group consisting of a difluorophosphate, a fluorosulfonate, and a trifluoromethanesulfonate, and more preferably at least one compound selected from the group consisting of lithium difluorophosphate, lithium fluorosulfonate, and lithium trifluoromethanesulfonate.

<"3">

"3" is at least one compound selected from the group consisting of compounds represented by the following general formula (3-1) to general formula (3-3).

[Chem. 14]

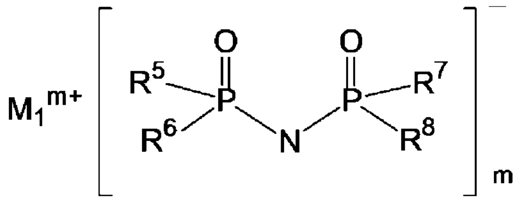

(3-1)

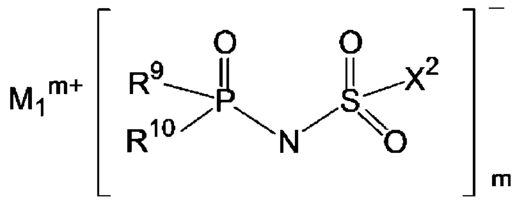

(3-2)

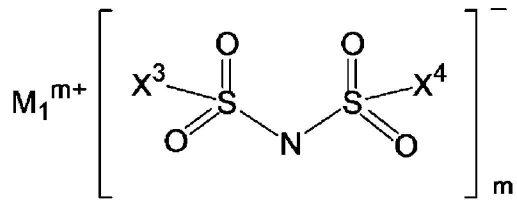

(3-3)

In the general formula (3-1) to the general formula (3-3), $R^5$ to $R^{10}$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group.

$X^2$ to $X^4$ are each independently a fluorine atom or an organic group selected from the group consisting of a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond may be present in the organic group.

Moreover, the general formulae (3-1) to (3-3) include at least one P-F bond and/or S-F bond.

$M_1^{m+}$ is a proton, a metal cation, or an onium cation. m represents a valence of a corresponding cation.

Examples of the alkoxy group, the alkenyloxy group, the alkynyloxy group, the cycloalkoxy group, the cycloalkenyloxy group, and the aryloxy group represented by $R^5$ to $R^{10}$ include the alkoxy group, the alkenyloxy group, the alkynyloxy group, the cycloalkoxy group, the cycloalkenyloxy group, and the aryloxy group represented by $R^3$ and $R^4$ in the general formula (2-1) described above.

$R^5$ to $R^{10}$ are each independently preferably a fluorine atom or an alkoxy group having a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $R^5$ to $R^{10}$ preferably have 6 or less carbon atoms. The number of carbon atoms is preferably 6 or less because the ionic conductivity tends to be relatively high.

Examples of the alkyl group, the alkenyl group, the alkynyl group, the cycloalkyl group, the cycloalkenyl group, the aryl group, the alkoxy group, the alkenyloxy group, the alkynyloxy group, the cycloalkoxy group, the cycloalkenyloxy group, and the aryloxy group represented by $X^2$ to $X^4$ include the alkyl group, the alkenyl group, the alkynyl group, the cycloalkyl group, the cycloalkenyl group, the aryl group, the alkoxy group, the alkenyloxy group, the alkynyloxy group, the cycloalkoxy group, the cycloalkenyloxy group, and the aryloxy group represented by $X^1$ in the general formula (2-1) described above.

$X^2$ to $X^4$ are each preferably a fluorine atom or an alkyl group containing a fluorine atom because the ionic conductivity in a solution or a composition increases due to improvement of the ion dissociation degree due to the strong electron-withdrawing property. Furthermore, a fluorine atom is more preferable because the ionic conductivity in a solution or a composition becomes very high due to the effect of improving the mobility due to a decrease in anion size.

Moreover, $X^2$ to $X^4$ preferably have 6 or less carbon atoms because the ionic conductivity tends to be relatively

high. The number of carbon atoms is more preferably 1 to 4, and the number of carbon atoms is further preferably 1 to 3. Specific examples thereof include a trifluoromethyl group and a pentafluoroethyl group, and a trifluoromethyl group, which has a small anion size, is particularly preferable.

In the general formulae (3-1) to (3-3), $M_1^{m+}$ has the same meaning as $M_1^{m+}$ in the general formula (2-1), and preferable examples thereof are also the same.

Specific examples of the anion structures of the compounds represented by the general formulae (3-1) to (3-3) are shown below, but the anion structures are not limited thereto.

[Chem. 15]

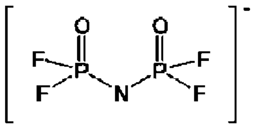
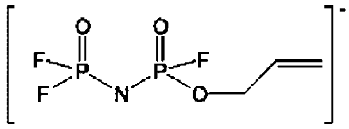
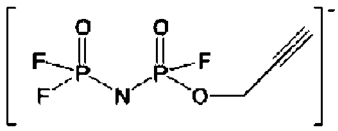
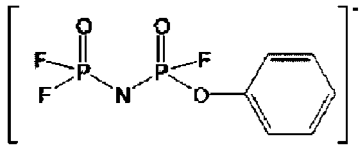
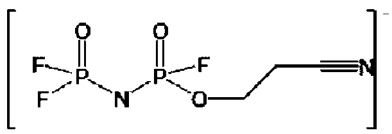
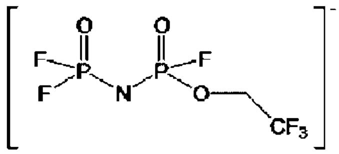
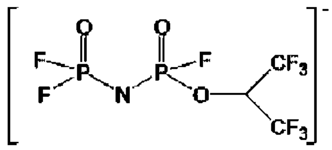
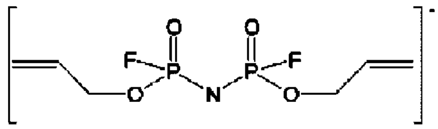
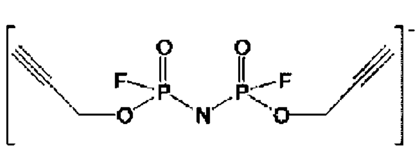
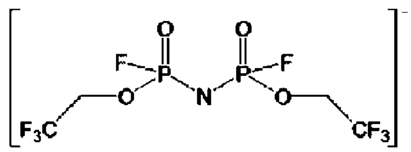

[Chem. 16]

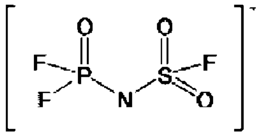

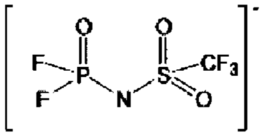

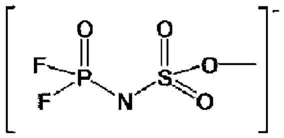

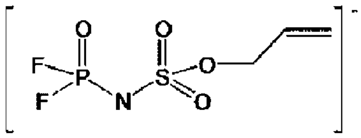

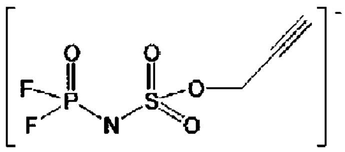

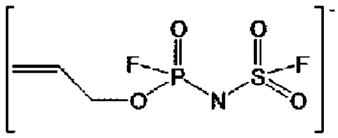

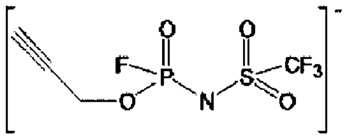

[Chem. 17]

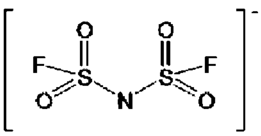

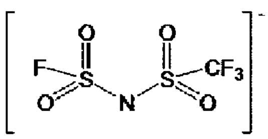

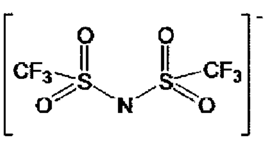

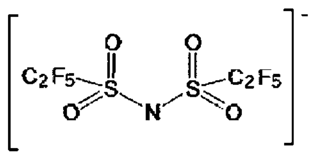

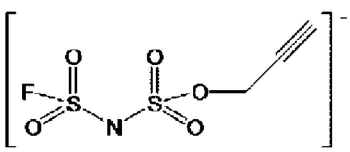

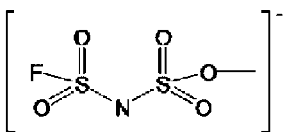

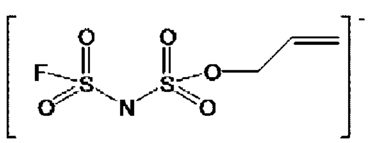

"3" is preferably at least one compound selected from the group consisting of a bis(fluorosulfonyl)imide salt, a (fluorosulfonyl)(difluorophosphoryl)imide salt, a bis(trifluoromethanesulfonyl)imide salt, a bis(difluorophosphoryl)imide salt, a bis(pentafluoroethanesulfonyl)imide salt, and a (fluorosulfonyl)(trifluoromethanesulfonyl)imide salt, and more preferably at least one compound selected from the group consisting of lithium bis(fluorosulfonyl)imide, lithium (fluorosulfonyl)(difluorophosphoryl)imide, lithium bis(trifluoromethanesulfonyl)imide, lithium bis(difluorophosphoryl)imide, lithium bis(pentafluoroethanesulfonyl)imide, and lithium (fluorosulfonyl)(trifluoromethanesulfonyl)imide.

<"4">

"4" is at least one compound selected from the group consisting of a compound represented by the following general formula (4-1) and a compound represented by the following general formula (4-2).

[Chem. 18]

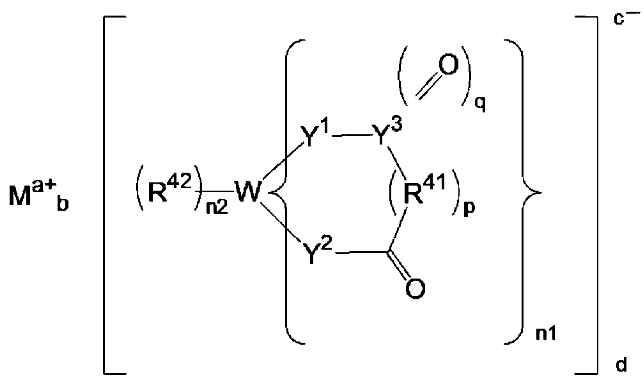

(4-1)

In the general formula (4-1), W represents a boron atom, a phosphorus atom, or a silicon atom. n1 is 0 to 3. n2 is 0 to 4. p is 0 or 1. $R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents a valence of the corresponding cation. a to d are each 1 or 2 and satisfy a $\times$ b = c $\times$ d.

[Chem. 19]

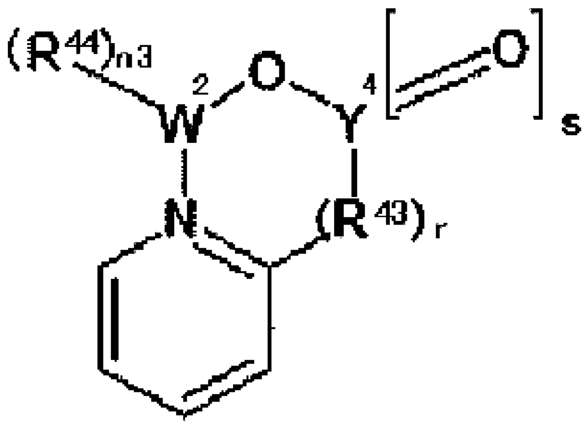

(4 − 2)

In the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof), and r is 0 or 1. $Y^4$ represents a carbon atom or a sulfur atom. s is 1 when $Y^4$ is a carbon atom, and s is 1 or 2 when $Y^4$ is a sulfur atom. $W^2$ represents a boron atom or a phosphorus atom, and $R^{44}$ represents a halogen atom. n3 is 2 when $W^2$ is a boron atom, and n3 is 4 when $W^2$ is a phosphorus atom.

W represents a boron atom, a phosphorus atom, or a silicon atom and is preferably a boron atom or a phosphorus atom.

Examples of the alkylene group having 1 to 10 carbon atoms represented by $R^{41}$ include a methylene group, an ethylene group, an n-propylene group, an isopropylene group, an n-butylene group, and an n-hexylene group.

Examples of the halogenated alkylene group having 1 to 10 carbon atoms represented by $R^{41}$ include a group in which any hydrogen atom of the alkylene group is substituted with a halogen atom.

Examples of the arylene group having 6 to 20 carbon atoms represented by $R^{41}$ include a phenylene group and a naphthylene group.

Examples of the halogenated arylene group having 6 to 20 carbon atoms represented by $R^{41}$ include a group in which any hydrogen atom of the arylene group is substituted with a halogen atom.

$R^{41}$ is preferably a methylene group, an ethylene group, an n-propylene group, a difluoromethylene group, a tetrafluoroethylene group, or a hexafluoropropylene group, and more preferably a methylene group.

Examples of the halogen atom represented by $R^{42}$ include a fluorine atom, a chlorine atom, and an iodine atom, and a fluorine atom is preferable.

$Y^1$ and $Y^2$ each independently represent an oxygen atom or a sulfur atom, and it is preferable that both are oxygen atoms.

$Y^3$ represents a carbon atom or a sulfur atom and is preferably a carbon atom.

Examples of the alkali metal cation, the alkaline earth metal cation, and the onium cation represented by $M^{a+}$ include the alkali metal cations, the alkaline earth metal cations, and the onium cations listed as $M_1^{m+}$ in the general formula (2-1) described above, and preferable examples thereof are also the same.

Examples of the compound represented by the general formula (4-1) include a tetrafluoroborate, a bis(oxalato) borate, a difluoro(oxalato)borate, a tris(oxalato)phosphate, a difluorobis(oxalato)phosphate, a tetrafluoro(oxalato)phosphate, a tris(oxalato)silicate, a difluorobis(oxalato)silicate, a difluoro(malonato)borate, a tetrafluoro(malonato)phosphate, a difluoro(sulfoacetato)borate, a difluoro(maleato)borate, and a difluoro(fumarato)borate.

Examples of the alkylene group having 1 to 10 carbon atoms represented by $R^{43}$ include a methylene group, an ethylene group, an n-propylene group, an isopropylene group, an n-butylene group, and an n-hexylene group.

Examples of the halogenated alkylene group having 1 to 10 carbon atoms represented by $R^{43}$ include a group in which any hydrogen atom of the alkylene group is substituted with a halogen atom.

Examples of the arylene group having 6 to 20 carbon atoms represented by $R^{43}$ include a phenylene group and a naphthylene group.

Examples of the halogenated arylene group having 6 to 20 carbon atoms represented by $R^{43}$ include a group in which any hydrogen atom of the arylene group is substituted with a halogen atom.

$R^{43}$ is preferably a methylene group, an ethylene group, an n-propylene group, a difluoromethylene group, a tetrafluoroethylene group, or a hexafluoropropylene group, and more preferably a methylene group.

Examples of the halogen atom represented by $R^{44}$ include a fluorine atom, a chlorine atom, and an iodine atom, and a fluorine atom is preferable.

$Y^4$ represents a carbon atom or a sulfur atom and is preferably a carbon atom.

Examples of the compound represented by the general formula (4-2) include the following compounds.

[Chem. 20]

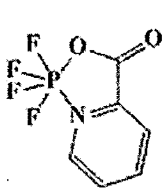 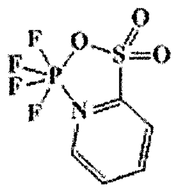 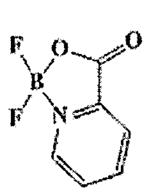 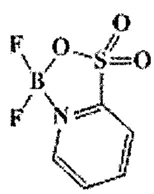

Of these, the following compound is preferable.

[Chem. 21]

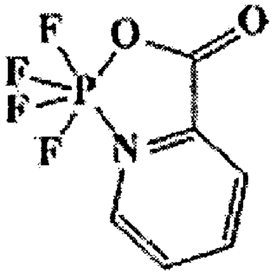

"4" is preferably at least one compound selected from the group consisting of a tetrafluoroborate, a bis(oxalato) borate, a difluoro(oxalato)borate, a tris(oxalato)phosphate, a difluorobis(oxalato)phosphate, a tetrafluoro(oxalato)phosphate, a difluoro(malonato)borate, a tetrafluoro(malonato)phosphate, a tetrafluoro(picolinato)phosphate, and a difluoro(picolinato)borate, and more preferably at least one compound selected from the group consisting of lithium tetrafluoroborate, lithium bis(oxalato)borate, lithium difluoro(oxalato)borate, lithium tris(oxalato)phosphate, lithium difluorobis(oxalato)phosphate, lithium tetrafluoro(oxalato)phosphate, lithium difluoro(malonato)borate, lithium tetrafluoro(malonato) phosphate, a tetrafluoro(picolinato)phosphate, and a difluoro(picolinato)borate.

<"5">

"5" is at least one compound represented by the following general formula (5).
[Chem. 22]

$$Si(R^{51})_v(R^{52})_{4-v} \qquad (5)$$

In the general formula (5), $R^{51}$'s each independently represent a group having a carbon-carbon unsaturated bond. When there are a plurality of $R^{52}$'s, $R^{52}$'s each independently represent a fluorine atom or a linear or branched alkyl group having 1 to 10 carbon atoms, and the alkyl group may have at least one of a fluorine atom or an oxygen atom. v represents an integer of 2 to 4.

Examples of the group having a carbon-carbon unsaturated bond represented by $R^{51}$ include an alkenyl group having 2 to 8 carbon atoms, such as a vinyl group, an allyl group, a l-propenyl group, an isopropenyl group, a 2-butenyl group, and a 1,3-butadienyl group, an alkenyloxy group derived from such a group, an alkynyl group having 2 to 8 carbon atoms, such as an ethynyl group, a 2-propynyl group, and a 1,1 dimethyl-2-propynyl group, an alkynyloxy group derived from such a group, an aryl group having 6 to 12 carbon atoms, such as a phenyl group, a tolyl group, and a xylyl group, and an aryloxy group derived from such a group. Moreover, the group may have a fluorine atom and an oxygen atom. Of these, a group containing a carbon-carbon unsaturated bond having 6 or less carbon atoms is preferable. When the number of carbon atoms is 6 or less, the resistance tends to be relatively small when a film is formed on the electrode. Specifically, a group selected from the group consisting of a vinyl group, an allyl group, a 1-propenyl group, an ethynyl group, and a 2-propynyl group is preferable.

When there are a plurality of $R^{52}$'s, $R^{52}$'s each independently represent a fluorine atom or a linear or branched alkyl group having 1 to 10 carbon atoms.

Examples of the linear or branched alkyl group having 1 to 10 carbon atoms represented by $R^{52}$ include a methyl group, an ethyl group, a propyl group, an isopropyl group, an n-butyl group, a sec-butyl group, an isobutyl group, a tert-butyl group, and an n-pentyl group. Moreover, the group may have at least one of a fluorine atom or an oxygen atom.

Of these, a fluorine atom or a group selected from the group consisting of a methyl group, an ethyl group, a propyl group, a 2,2,2-trifluoroethyl group, a 2,2,3,3-tetrafluoropropyl group, a 1,1,1-trifluoroisopropyl group, and a 1,1,1,3,3,3-hexafluoroisopropyl group results in a tendency towards smaller initial resistance when a film is formed on the electrode, which is preferable from the viewpoint of the resulting output characteristic.

In the general formula (5), v represents an integer of 2 to 4 and is preferably 3 or 4 and particularly preferably 4.

Specific examples of the compound represented by the general formula (5) are shown below, but the compound is not limited thereto.

[Chem. 23]

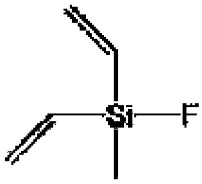
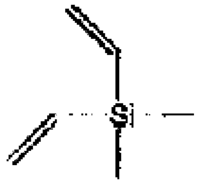
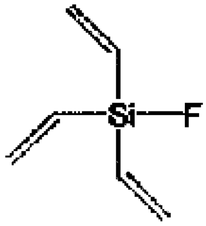

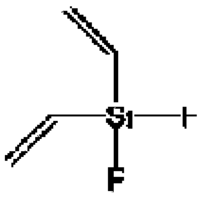
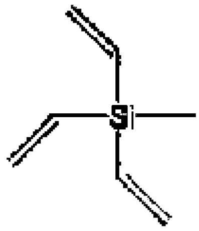
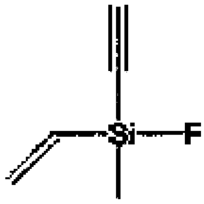

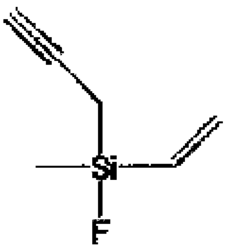
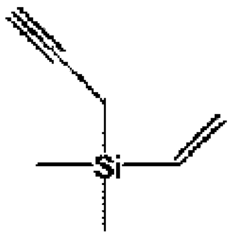
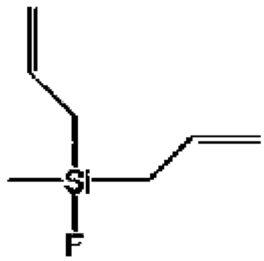

[Chem. 24]

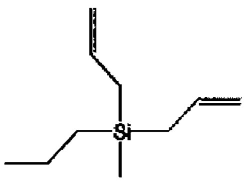
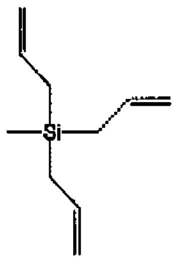
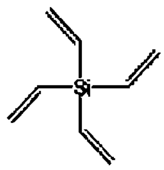

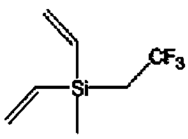
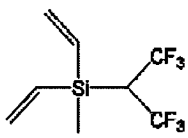
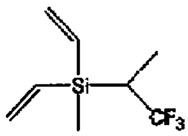

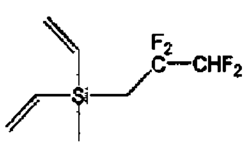
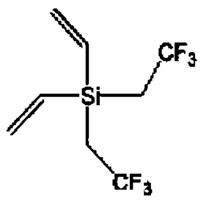
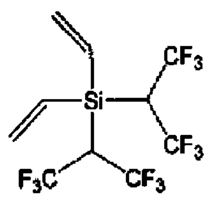

"5" is preferably at least one compound selected from the group consisting of trivinylmethylsilane, trivinylfluorosilane, and tetravinylsilane.

<"6">

"6" is at least one compound represented by the following general formula (6).

[Chem. 25]

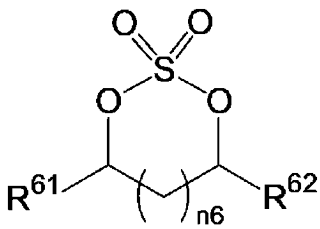

(6)

In the general formula (6), $R^{61}$ and $R^{62}$ each independently represent a hydrogen atom, an alkyl group having 1 or 2 carbon atoms, a linear or branched-chain alkenyl group having 2 to 5 carbon atoms, or an aryl group which may be substituted with an alkyl group having 6 to 10 carbon atoms. Any hydrogen atom of the alkyl group, the alkenyl group, and the aryl group represented by $R^{61}$ and $R^{62}$ may be substituted with a halogen atom. n6 is 0 or 1.

When $R^{61}$ and $R^{62}$ are each an alkyl group having 1 or 2 carbon atoms, examples of the alkyl group include a methyl group and an ethyl group.

When $R^{61}$ and $R^{62}$ are each a linear or branched-chain alkenyl group having 2 to 5 carbon atoms, examples of the alkenyl group include a vinyl group, an allyl group, a l-propenyl group, an isopropenyl group, a 2-butenyl group, and a 1,3-butadienyl group.

When $R^{61}$ and $R^{62}$ are each an aryl group which may be substituted with an alkyl group having 6 to 10 carbon atoms, examples of the aryl group include a phenyl group, a tolyl group, and a xylyl group.

The number of carbon atoms of 6 to 10 represents the total number of the number of carbon atoms of the aryl group and the number of carbon atoms of the alkyl group when the aryl group is substituted with an alkyl group.

At least any one hydrogen atom of the alkyl group, the alkenyl group, and the aryl group may be substituted with a halogen atom. Examples of the halogen atom include a fluorine atom, a bromine atom, and an iodine atom, and a fluorine atom is preferable.

$R^{61}$ and $R^{62}$ each preferably represent a hydrogen atom. When n6 is 0, the carbon atom to which $R^{61}$ is bonded and the carbon atom to which $R^{62}$ is bonded are bonded by a single bond.

That is, "6" is preferably at least one compound selected from the group consisting of 1,3,2-dioxathiolane-2,2-dioxide and 1,3,2-dioxathiane-2,2-dioxide.

Specific examples of the compound represented by the general formula (6) are shown below, but the compound is not limited thereto.

[Chem. 26]

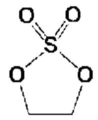
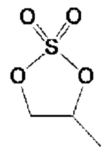
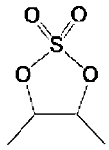
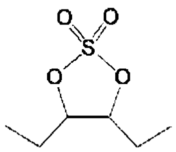
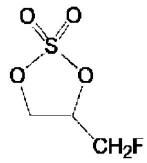
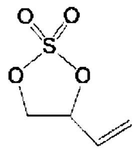
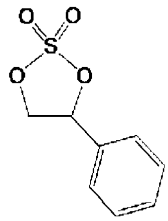

[Chem. 27]

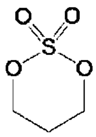
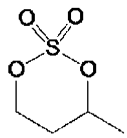
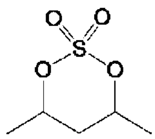
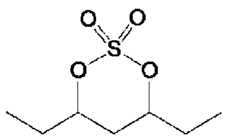
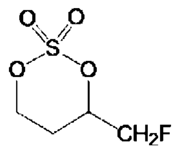
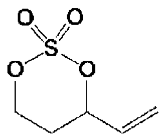
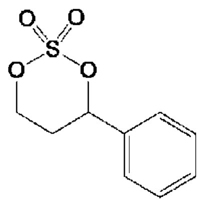

<"7">

The "7" is at least one compound selected from the group consisting of compounds represented by the following general formula (7-1) and general formula (7-2).

[Chem. 28]

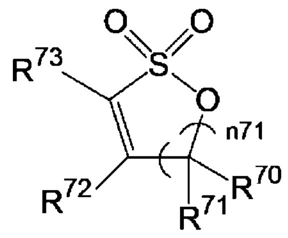

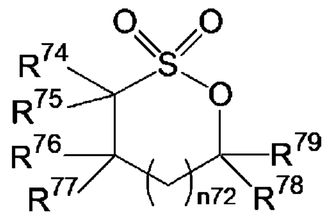

(7-1) (7-2)

In the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms. n71 represents an integer of 1 to 3.

In the general formula (7-2), $R^{74}$ to $R^{79}$ each independently represent a hydrogen atom, an alkyl group having 1 to 6 carbon atoms, or a fluoroalkyl group having 1 to 4 carbon atoms. n72 represents an integer of 0 to 2.

In the general formula (7-1), examples of the alkyl group represented by $R^{70}$ to $R^{73}$ include an alkyl group having 1 to 5 carbon atoms, such as a methyl group, an ethyl group, a propyl group, an isopropyl group, a butyl group, a sec-butyl group, a tert-butyl group, and an n-pentyl group.

Examples of the fluoroalkyl group represented by $R^{70}$ to $R^{73}$ include a fluoroalkyl group having 1 to 4 carbon atoms, such as a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

$R^{70}$ to $R^{73}$ are each preferably a hydrogen atom, a fluorine atom, or a trifluoromethyl group and more preferably a hydrogen atom.

In the general formula (7-1), n71 represents an integer of 1 to 3, may be 1 or 2 and is preferably 1.

Examples of the compound represented by the general formula (7-1) include 1,3-propene sultone (1-propene-1,3-sultone), 1,4-butene sultone, 2,4-pentene sultone, 3,5-pentene sultone, 1-fluoro-1,3-propene sultone, 1-trifluoromethyl-1,3-propene sultone, 1,1,1-trifluoro-2,4-butene sultone, 1,4-butene sultone, and 1,5-pentene sultone.

In the general formula (7-2), examples of the alkyl group represented by $R^{74}$ to $R^{79}$ include an alkyl group having 1 to 6 carbon atoms, such as a methyl group, an ethyl group, a propyl group, an isopropyl group, a butyl group, a sec-butyl group, a tert-butyl group, an n-pentyl group, and an n-hexyl group.

Examples of the fluoroalkyl group represented by $R^{74}$ to $R^{79}$ include a fluoroalkyl group having 1 to 4 carbon atoms, such as a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

$R^{74}$ to $R^{79}$ are each preferably a hydrogen atom, a fluorine atom, or a trifluoromethyl group and more preferably a hydrogen atom.

In the general formula (7-2), n72 represents an integer of 0 to 2, may be 0 or 1 and is preferably 0. When n72 is 0, the carbon atom to which $R^{76}$ and $R^{77}$ are bonded and the carbon atom to which $R^{78}$ and $R^{79}$ are bonded are bonded by a single bond.

Examples of the compound represented by the general formula (7-2) include 1,3-propane sultone, α-trifluoromethyl-γ-sultone, β-trifluoromethyl-γ-sultone, γ-trifluoromethyl-γ-sultone, α-methyl-γ-sultone, α,β-di(trifluoromethyl)-γ-sultone, α,α-di(trifluoromethyl)-γ-sultone, α-heptafluoropropyl-γ-sultone, 1,4-butanesultone, and 1,5-pentanesultone.

"7" is preferably at least one compound selected from the group consisting of 1,3-propane sultone and 1-propene-1,3-sultone.

In the nonaqueous electrolyte solution of the present disclosure, the lower limit of the component (11) content with respect to the total amount (100% by mass) of the nonaqueous electrolyte solution (hereinafter also referred to as "concentration of (11)") may be 0.01% by mass or more, may be 0.05% by mass or more, or may be 0.1% by mass or more. The upper limit of the concentration of (II) may be 10% by mass or less, may be 5% by mass or less, may be 4% by mass or less, or may be 2.5% by mass or less.

By setting the concentration of (II) to 0.01% by mass or more, an effect of preventing an increase in the initial resistance of the nonaqueous electrolyte solution battery using the nonaqueous electrolyte solution and an effect of improving the cycle characteristic are easily obtained. On the other hand, by setting the concentration of (II) to 10% by mass or less, an increase in the viscosity of the nonaqueous electrolyte solution can be prevented, and an effect of preventing an increase in the initial resistance of the nonaqueous electrolyte solution battery using the nonaqueous electrolyte solution is easily obtained.

The component (II) content with respect to the total amount of the nonaqueous electrolyte solution may be 0.01% by mass to 10% by mass or may be 0.01 to 5% by mass.

Here, the content of $LiN(CF_3SO_2)_2$, $LiN(FSO_2)_2$, $LiN(POF_2)_2$, $LiCF_3SO_3$, $LiC_4F_9SO_3$, $NaN(CF_3SO_2)_2$, $NaN(FSO_2)_2$, $NaN(POF_2)_2$, $NaCF_3SO_3$, or $NaC_4F_9SO_3$ with respect to the total amount of the nonaqueous electrolyte solution may be 0.01% by mass or more and 20% by mass or less.

In the nonaqueous electrolyte solution of the present disclosure, one type of compound may be used alone as the component (II), or two or more types of compounds may be mixed and used in any combination and any ratio according to the application.

The compounds selected from the group consisting of the above "2" to "7" can be produced by a known method.

<(III) Solute>

The nonaqueous electrolyte solution of the present disclosure contains a solute.

The solute is not particularly limited but is preferably an ionic salt, and more preferably an ionic salt containing fluorine.

The solute is preferably, for example, an ionic salt composed of a pair of at least one cation selected from the group consisting of an alkali metal ion such as a lithium ion and a sodium ion, an alkaline earth metal ion, and a quaternary ammonium, and at least one anion selected from the group consisting of a hexafluorophosphate anion, a perchlorate anion, a hexafluoroarsenate anion, a hexafluoroantimonate anion, and a tris(trifluoromethanesulfonyl)methide anion.

The solute is preferably at least one selected from the group consisting of $LiPF_6$, $LiSbF_6$, $LiAsF_6$, $LiClO_4$, $LiAlO_2$, $LiAlCl_4$, LiCl, and LiI or at least one selected from the group consisting of $NaPF_4$, $NaSbF_6$, $NaAsF_6$, $NaClO_4$, $NaAlO_2$, $NaAlCl_4$, NaCl, and NaI.

One type of these solutes may be used alone, or two or more types thereof may be mixed and used in any combination and any ratio according to the application.

Of these, in view of energy density, output characteristic, life, and the like of the nonaqueous electrolyte solution battery, the cation is preferably at least one selected from the group consisting of lithium, sodium, potassium, magnesium, and quaternary ammonium, and the anion is preferably at least one selected from the group consisting of a hexafluorophosphate anion and a tetrafluoroborate anion.

The total amount of the solute in the nonaqueous electrolyte solution of the present disclosure (hereinafter, also referred to as "solute concentration") is not particularly restricted, but the lower limit is preferably 0.5 mol/L or more, more preferably 0.7 mol/L or more, and further preferably 0.9 mol/L or more. Further, the upper limit of the solute concentration is preferably 5 mol/L or less, more preferably 4 mol/L or less, and further preferably 2 mol/L or less. By setting the solute concentration to 0.5 mol/L or more, the deterioration of the cycle characteristic and the output characteristic of the nonaqueous electrolyte solution battery due to the decrease in the ionic conductivity can be suppressed, and by setting the solute concentration to 5 mol/L or less, the deterioration in the ionic conductivity and the deterioration in the cycle characteristic and the output characteristic of the nonaqueous electrolyte solution battery due to an increase in the viscosity of the nonaqueous electrolyte solution can be suppressed.

<(IV) Nonaqueous Organic Solvent>

The (IV) nonaqueous organic solvent (also referred to as "(IV)") contained in the nonaqueous electrolyte solution of the present disclosure will be explained. The type of the (IV) nonaqueous organic solvent is not particularly limited, and any nonaqueous organic solvent can be used.

Specific examples of the (IV) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), fluoroethylene carbonate (hereinafter, sometimes referred to as "FEC"), and butylene carbonate, as well as γ-butyrolactone and γ-valerolactone. Here, when the FEC content with respect to the total amount of the nonaqueous electrolyte solution is 10% by mass or less, the FEC is defined as the other additive described later.

Examples of the chain ester include chain carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), and methyl propyl carbonate, as well as methyl acetate, methyl propionate, and ethyl propionate (hereinafter, sometimes referred to as "EP").

Examples of the cyclic ether include tetrahydrofuran, 2-methyltetrahydrofuran, and dioxane.

Examples of the chain ether include dimethoxyethane and diethyl ether.

Other examples include sulfone compounds and sulfoxide compounds such as dimethyl sulfoxide and sulfolane. In addition, an ionic liquid and the like can also be exemplified.

The (IV) nonaqueous organic solvent may contain at least one selected from the group consisting of a cyclic ester, a chain ester, a cyclic ether, a chain ether, a sulfone compound, a sulfoxide compound, and an ionic liquid.

The cyclic ester may be a cyclic carbonate, and the cyclic carbonate may be at least one selected from the group

consisting of ethylene carbonate, propylene carbonate, and fluoroethylene carbonate.

The chain ester may be a chain carbonate, and the chain carbonate may be at least one selected from the group consisting of ethyl methyl carbonate, dimethyl carbonate, diethyl carbonate, and methyl propyl carbonate.

In the nonaqueous electrolyte solution of the present disclosure, one type of compound may be used alone as (IV), or two or more types of compounds may be mixed and used in any combination and any ratio according to the application.

The cyclic carbonate content is not particularly restricted and is any content as long as the effects of the present disclosure are not significantly impaired, but the content in the case where one type is used alone may be 3% by volume or more and more preferably 5% by volume or more in 100% by volume of the nonaqueous organic solvent. Within this range, a decrease in the electric conductivity due to a decrease in the permittivity of the nonaqueous electrolyte solution is avoided, and the large current discharge characteristic of the nonaqueous electrolyte solution battery, the stability with respect to the negative electrode, and the cycle characteristic can be easily set in excellent ranges. The content is usually 90% by volume or less, preferably 85% by volume or less, and more preferably 80% by volume or less. Within this range, the viscosity of the nonaqueous electrolyte solution is set in an appropriate range, a decrease in the ionic conductivity is suppressed, and thus the load characteristic of the nonaqueous electrolyte solution battery is easily set in an excellent range.

Moreover, two or more types of cyclic carbonate can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly restricted and is any amount as long as the effects of the present disclosure are not significantly impaired, but the amount is usually 1% by volume or more, preferably 2% by volume or more, and more preferably 3% by volume or more, and is usually 30% by volume or less, preferably 25% by volume or less, and more preferably 20% by volume or less. Propylene carbonate is preferably contained in this range because the low-temperature characteristic is more excellent while the characteristics of the combination of ethylene carbonate and a dialkyl carbonate are maintained.

One type of chain ester may be used alone, or two or more types may be used in any combination and any ratio.

The chain ester content is not particularly limited but is usually 15% by volume or more, preferably 20% by volume or more, and more preferably 25% by volume or more in 100% by volume of the nonaqueous organic solvent. The content is usually 90% by volume or less, preferably 85% by volume or less, and more preferably 80% by volume or less. When the chain ester content is in the above range, the viscosity of the nonaqueous electrolyte solution is set in an appropriate range, a decrease in the ionic conductivity is suppressed, and thus the input/output characteristic and the charge-discharge rate characteristic of the nonaqueous electrolyte solution battery are easily set in excellent ranges. In addition, a decrease in the electric conductivity due to a decrease in the permittivity of the nonaqueous electrolyte solution is avoided, and the input/output characteristic and the charge-discharge rate characteristic of the nonaqueous electrolyte solution battery are easily set in excellent ranges.

Further, by combining ethylene carbonate with a specific chain ester in a specific content, the battery performance can be significantly improved.

For example, when dimethyl carbonate and ethyl methyl carbonate are selected as specific chain esters, the ethylene carbonate content is not particularly restricted, and is any content as long as the effects of the present disclosure are not significantly impaired, but the content is usually 5% by volume or more and preferably 10% by volume or more, and is usually 45% by volume or less and preferably 40% by volume or less. The dimethyl carbonate content is usually 20% by volume or more and preferably 30% by volume or more, and is usually 50% by volume or less and preferably 45% by volume or less, and the ethyl methyl carbonate content is usually 20% by volume or more and preferably 30% by volume or more, and is usually 50% by volume or less and preferably 45% by volume or less. When the contents are within the above ranges, the viscosity of the nonaqueous electrolyte solution is decreased, the ionic conductivity is improved, and high input/output can be obtained even at a low temperature while the low-temperature precipitation temperature of the electrolyte is decreased.

The chain ether content is not particularly restricted and is any content as long as the effects of the present disclosure are not significantly impaired, but the content is usually 1% by volume or more, preferably 2% by volume or more, and more preferably 3% by volume or more, and is usually 30% by volume or less, preferably 25% by volume or less, and more preferably 20% by volume or less in 100% by volume of the nonaqueous organic solvent. When the chain ether content is within the above range, it is easy to secure the effect of improving the ionic conductivity of the chain ether due to improvement in the lithium ion dissociation degree and a decrease in the viscosity. When the negative electrode active material is a carbonaceous material, the phenomenon in which the chain ether is co-intercalated with lithium ions can be suppressed, and thus the input/output characteristic and the charge-discharge rate characteristic can be set in appropriate ranges.

The sulfone compound content is not particularly restricted and is any content as long as the effects of the present disclosure are not significantly impaired, but the content is usually 0.3% by volume or more, preferably 0.5% by volume or

more, and more preferably 1% by volume or more, and is usually 40% by volume or less, preferably 35% by volume or less, and more preferably 30% by volume or less in 100% by volume of the nonaqueous organic solvent. When the sulfone compound content is within the above range, the effect of improving the durability such as the cycle characteristic and the storage characteristic can be easily obtained, the viscosity of the nonaqueous electrolyte solution can be set in an appropriate range, a decrease in the electric conductivity can be avoided, and the input/output characteristic and the charge-discharge rate characteristic of the nonaqueous electrolyte solution battery can be set in appropriate ranges.

<Other Additive>

An additive component which is generally used may be further added to the nonaqueous electrolyte solution of the present disclosure in any ratio as long as the gist of the present disclosure is not impaired.

Specific examples of the other additive include cyclohexylbenzene, cyclohexylfluorobenzene, fluorobenzene, biphenyl, difluoroanisole, tert-butylbenzene, tert-amylbenzene, 2-fluorotoluene, 2-fluorobiphenyl, vinylene carbonate, an oligomer of vinylene carbonate (number average molecular weight in terms of polystyrene is 170 to 5000), dimethyl vinylene carbonate, vinyl ethylene carbonate, fluoroethylene carbonate, transdifluoroethylene carbonate, methyl propargyl carbonate, ethyl propargyl carbonate, dipropargyl carbonate, ethynyl ethylene carbonate, maleic anhydride, succinic anhydride, 1,2-ethanedisulfonic anhydride, methylene methane disulfonate, dimethylene methane disulfonate, trimethylene methane disulfonate, methyl methanesulfonate, 1,6-diisocyanatohexane, tris(trimethylsilyl)borate, succinonitrile, (ethoxy)pentafluorocyclotriphosphazene, lithium monofluorophosphate, sodium monofluorophosphate, potassium monofluorophosphate, methanesulfonyl fluoride, ethene sulfonyl fluoride, phenyl difluorophosphate, 1,3-dimethyl-1,3-divinyl-1,3-di(1,1,1,3,3,3-hexafluoroisopropyl)disiloxane, and nitrate, and the nonaqueous electrolyte solution of the present disclosure may contain at least one type of the above. The additive content of the nonaqueous electrolyte solution may be 0.01% by mass or more and 5% by mass or less with respect to the total amount of the nonaqueous electrolyte solution.

By adding the additive to the nonaqueous electrolyte solution of the present disclosure, at least one of the overcharge prevention effect, the negative electrode film formation effect, and the positive electrode protection effect may be improved.

The nonaqueous electrolyte solution of the present disclosure may contain a compound represented by the following general formula (3-4) as the other additive. Here, the compound corresponding to the general formula (3-2) is excluded.

[Chem. 29]

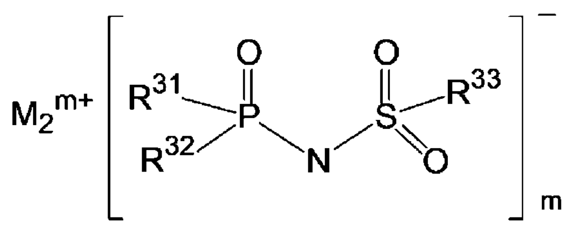

(3-4)

In the general formula (3-4), $R^{31}$ to $R^{33}$ have the same meaning as $X^2$ in the general formula (3-2) above. Here, at least one of $R^{31}$ to $R^{33}$ is a fluorine atom.

$M_2^{m+}$ is an alkali metal cation, an alkaline earth metal cation, or an onium cation, and m represents the same integer as the valence of the corresponding cation. Examples of the alkali metal cation, the alkaline earth metal cation, and the onium cation represented by $M_2^{m+}$ include the alkali metal cations, the alkaline earth metal cations, and the onium cations listed as $M_1^{m+}$ in the general formula (3-2) described above.

The other additive content of the nonaqueous electrolyte solution may be 0.01% by mass or more and 8% by mass or less with respect to the total amount of the nonaqueous electrolyte solution.

When the content of the ionic salt exemplified as the solute in the nonaqueous electrolyte solution is less than 0.5 mol/L, which is the lower limit of the suitable concentration of the solute, the ionic salt can exert a negative electrode film formation effect and a positive electrode protective effect as the "other additive". In this case, the content in the nonaqueous electrolyte solution may be 0.01% by mass to 5% by mass.

An alkali metal salt other than the solutes may be used as an additive.

Specific examples thereof include carboxylates, such as lithium acrylate, sodium acrylate, lithium methacrylate, and sodium methacrylate, and sulfate ester salts, such as lithium methyl sulfate, sodium methyl sulfate, lithium ethyl sulfate, and sodium ethyl sulfate.

Of the other additives, the nonaqueous electrolyte solution of the present disclosure may contain at least one selected from the group consisting of vinylene carbonate and fluoroethylene carbonate in an amount of 0.01 to 5% by mass with respect to the total amount of the nonaqueous electrolyte solution from the viewpoint of improving the durability (life) of the battery, when the nonaqueous electrolyte solution battery is a lithium ion battery.

When the nonaqueous electrolyte solution battery is a sodium ion battery, at least one selected from the group consisting of vinylene carbonate and fluoroethylene carbonate may be contained in an amount of 0.01 to 5% by mass with respect to the total amount of the nonaqueous electrolyte solution.

In addition, the nonaqueous electrolyte solution of the present disclosure can also contain a polymer, and as in the case of being used in a nonaqueous electrolyte solution battery referred to as a polymer battery, the nonaqueous electrolyte solution can be quasi-solidified with a gelling agent or a cross-linked polymer before use. The polymer solid electrolyte includes one containing a nonaqueous organic solvent as a plasticizer.

The polymer is not particularly limited as long as the polymer is an aprotic polymer capable of dissolving the sulfonic anhydride "1" represented by the general formula (1), at least one compound selected from the group consisting of the above "2" to "7", the solute, and the other additive. Examples thereof include polymers having polyethylene oxide as a principal chain or a side chain, homopolymers or copolymers of polyvinylidene fluoride, methacrylic acid ester polymers, and polyacrylonitrile. When a plasticizer is added to such a polymer, of the above nonaqueous organic solvents, an aprotic nonaqueous organic solvent is preferable.

[2. Nonaqueous Electrolyte Solution Battery]

The nonaqueous electrolyte solution battery of the present disclosure includes, at least, the nonaqueous electrolyte solution of the present disclosure described above, a negative electrode, and a positive electrode. Furthermore, a separator, an exterior body, and the like are preferably included.

The present invention also relates to a nonaqueous electrolyte solution battery including at least a positive electrode, a negative electrode, a separator, and the nonaqueous electrolyte solution of the present disclosure described above.

The negative electrode is not particularly limited, but a material capable of reversibly intercalating and deintercalating alkali metal ions such as lithium ions and sodium ions or alkaline earth metal ions may be used.

For example, in the case of a lithium ion secondary battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002 plane) in X-ray diffraction is 0.340 nm or less, a carbon material in which the d value of the lattice plane (002 plane) in X-ray diffraction exceeds 0.340 nm, oxides of one or more metals selected from Si, Sn, and Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, a metal nitride, a tin compound, a conductive polymer, and the like may also be used.

For example, in the case of a sodium ion secondary battery in which the cations are mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions or alkaline earth metal ions may be used.

For example, when the cation is lithium, lithium-containing transition metal oxide composites such as $LiCoO_2$, $LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, lithium-containing transition metal oxide composites in which a part of the transition metals in the lithium-containing transition metal oxide composites is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material.

Specific examples thereof include $Li[Ni_{1/3}Mn_{1/3}Co_{1/3}]O_2$, $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$, $Li[Ni_{0.8}Mn_{0.1}Co_{0.1}]O_2$ (hereinafter, sometimes referred to as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.83}Co_{0.10}Al_{0.03}O_2$, $LiNi_{0.87}Co_{0.10}Al_{0.03}O_2$,

$LiNi_{0.90}Co_{0.07}Al_{0.03}O_2$, $LiNi_{0.6}Co_{0.3}Al_{0.1}O_2$, and $LiMn_{1.5}Ni_{0.5}O_4$.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.5}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$, $Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material and polytetrafluoroethylene, polyvinylidene fluoride, SBR resin, or the like as a binder are added to the positive electrode and negative electrode materials, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a square shape, or an aluminum laminate sheet shape is assembled with the above elements.

## EXAMPLES

Hereinafter, the present invention will be specifically explained with Examples, but the present invention is not limited to these Examples.

The compounds of the components (I) and the components (II) used in the Examples and the Comparative Examples are shown below.

Compound (1-1): methanesulfonic anhydride
Compound (1-2): ethanesulfonic anhydride
Compound (2-1): lithium difluorophosphate
Compound (2-2): lithium fluorosulfonate
Compound (3-1): lithium bis(fluorosulfonyl)imide
Compound (4-1): lithium bis(oxalato)borate
Compound (4-2): lithium difluoro(oxalato)borate
Compound (4-3): lithium tris(oxalato)phosphate
Compound (4-4): lithium difluorobis(oxalato)phosphate
Compound (4-5): lithium tetrafluoro(oxalato)phosphate
Compound (4-6): lithium tetrafluoroborate
Compound (5-1): trivinylmethylsilane
Compound (5-2): trivinylfluorosilane
Compound (5-3): tetravinylsilane
Compound (6-1): 1,3,2-dioxathiolane-2,2-dioxide
Compound (7-1): 1,3-propane sultone
Compound (7-2): 1-propene-1,3-sultone

The structures of the comparative compound (3-X) and the comparative compound (5-X) are shown below.

[Chem. 30]

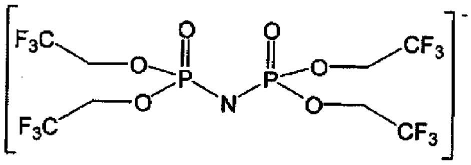

Compound (3-X)

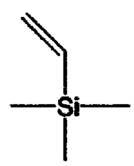

Compound (5-X)

[Preparation of Nonaqueous Electrolyte Solution]

[Example 1-1]

EC, EMC, and DMC were mixed in a volume ratio of EC:EMC:DMC = 25:55:20 in a glove box with a dew point of -60°C or lower (component (IV)). After that, $LiPF_6$ (component (III)) was added in an amount resulting in a concentration of 1.0 mol/L with keeping the internal temperature at 40°C or lower. The compound (1-1) (component (1)) was added at a concentration of 1.0% by mass with respect to the total amount of the nonaqueous electrolyte solution, and the compound (2-1) (component (II)) was added at a concentration of 1.0% by mass with respect to the total amount of the nonaqueous electrolyte solution. The mixture was stirred for one hour for dissolution to prepare the nonaqueous electrolyte solution according to Example 1-1.

The nonaqueous electrolyte solutions according to Examples 1-2 to 1-87, Comparative Examples 1-1 to 1-43, Examples 2-1 to 2-87, and Comparative Examples 2-1 to 2-43 were prepared by the same procedure as in the preparation of the electrolyte solution 1-1 except that the types and the concentrations of the component (I), the component (II), and the other additive were changed as in Table 1 to Table 12 below.

In the columns of the other additive in Tables 7 to 12, VC represents vinylene carbonate, and FEC represents fluoroethylene carbonate.

The concentrations of the component (I), the component (II), and the other additive in Tables 1 to 12 show the concentrations with respect to the total amount of the nonaqueous electrolyte solution.

[Production of Nonaqueous Electrolyte Solution Battery]

(Lithium Ion Battery: Production of NCM811 Positive Electrode)

In 92.0% by mass of $LiNi_{0.8}Co_{0.1}Mn_{0.1}O_2$ powder, 3.5% by mass of polyvinylidene fluoride (hereinafter also referred to as PVDF) as a binder and 4.5% by mass of acetylene black as a conductive material were mixed, and N-methyl-2-pyrrolidone was further added to produce a positive electrode mixture paste. The paste was applied onto both sides of an aluminum foil (A1085), dried, pressed and then punched into 4 cm × 5 cm to obtain an NCM811 positive electrode for testing.

(Production of Natural Graphite Negative Electrode)

By mixing 97.0% by mass of natural graphite powder, 2.0% by mass of styrene-butadiene rubber as a binder, 1.0% by mass of sodium carboxymethyl cellulose, and water, a negative electrode mixture paste was produced. The paste was applied onto one side of a copper foil, dried, pressed and then punched into 4.5 cm × 5.5 cm to obtain a natural graphite negative electrode for testing.

(Production of Silicon-Containing Graphite Negative Electrode)

By mixing 20.0% by mass of $SiO_x$ (x = 1), 3.0% by mass of a conductive material (HS-100 manufactured by Denka Company Limited), 2.0% by mass of carbon nanofiber (VGCF manufactured by Showa Denko K.K.), 2.0% by mass of styrene-butadiene rubber, 1.0% by mass of sodium carboxymethyl cellulose, and water in 72.0% by mass of artificial graphite powder, a negative electrode mixture paste was produced. The paste was applied onto one side of a copper foil, dried, pressed and then punched into 4.5 cm × 5.5 cm to obtain a silicon-containing graphite negative electrode for testing.

(Production of Nonaqueous Electrolyte Solution Battery)

Under an argon atmosphere at a dew point of -50°C or lower, a terminal was welded to the above NCM811 positive electrode, and both sides of the welded product were then sandwiched between two polyethylene separators (5 cm × 6 cm). Further, the outside of the sandwiched product was sandwiched between two natural graphite negative electrodes or silicon-containing graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution was vacuum-injected into the bag, the opening was sealed with heat. In this manner, the aluminum laminated nonaqueous electrolyte solution batteries of the Examples and the Comparative Examples were produced. The nonaqueous electrolyte solutions shown in Tables 1 to 12 were used. In the Examples and the Comparative Examples in Tables 1 to 6, the natural graphite negative electrodes were used, and in the Examples and the Comparative Examples in Tables 7 to 12, the silicon-containing graphite negative electrodes were used.

The initial resistance, the cycle characteristic, and the high-temperature storage characteristic were evaluated by the methods described below using the cells produced by the method described above.

[Evaluation of Nonaqueous Electrolyte Solution Battery]

(Evaluation of Nonaqueous Electrolyte Solution Batteries Shown in Tables 1 to 6)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 mA/cm$^2$. After 4.2 V was maintained for one hour, the battery was discharged to 2.5 V at a current density of 0.38 mA/cm$^2$. This was defined as one charge and discharge cycle, and three cycles of charge and discharge in total were performed to stabilize the battery. The discharge capacity in the third cycle was defined as the initial charge-discharge capacity.

<Initial Resistance>

After the initial charge and discharge, the battery was charged to 4.2 V at 25°C and 0.38 mA/cm$^2$, and the resistance value was directly measured by impedance measurement.
The numerical values of the initial resistance of Examples 1-1 to 1-87 and Comparative Examples 1-1 to 1-43 shown in Tables 1 to 6 are relative values based on the numerical value of the initial resistance of Comparative Example 1-1 regarded as 100.

<High-Temperature Storage Characteristic>

The nonaqueous electrolyte solution batteries of Examples 1-1 to 1-87 and Comparative Examples 1-1 to 1-43 shown in Tables 1 to 6 after the initial charge and discharge were charged at an upper limit charge voltage of 4.2 V and 0.38 mA/cm$^2$, then taken out of the charge and discharge device maintained at 25°C and stored in a constant temperature bath at 60°C for 14 days. Then, the batteries were placed in a charge and discharge device maintained at 25°C and discharged at 0.38 mA/cm$^2$ to a discharge end voltage of 2.5 V, and the degrees of deterioration of the cells were evaluated with the discharge capacity retention rates after storage. The discharge capacity retention rates after storage at 60°C were determined by the following equation.

(Discharge Capacity Retention Rate after Storage at 60°C)

Discharge capacity retention rate (%) = (discharge capacity after storage at 60°C/initial charge-discharge capacity) × 100

The numerical values of the discharge capacity retention rates after storage at 60°C of Examples 1-1 to 1-87 and Comparative Examples 1-1 to 1-43 shown in Tables 1 to 6 are relative values based on the discharge capacity retention rate after storage at 60°C of Comparative Example 1-1 regarded as 100.
The discharge capacity retention rates after storage at 60°C of Examples 1-1 to 1-87 and Comparative Examples 1-1 to 1-43 are described as "Capacity after Storage at 60°C" in Tables 1 to 6.

(Resistance Value after Storage at 60°C)

Next, the batteries were charged to 4.2 V at 25°C and 0.38 mA/cm$^2$, and the resistance values were directly measured by impedance measurement.
The resistance values after storage at 60°C of Examples 1-1 to 1-87 and Comparative Examples 1-1 to 1-43 shown in Tables 1 to 6 are relative values based on the resistance value after storage at 60°C of Comparative Example 1-1 regarded as 100.
The resistance values after storage at 60°C of Examples 1-1 to 1-87 and Comparative Examples 1-1 to 1-43 are described as "Resistance after Storage at 60°C" in Tables 1 to 6.

(Evaluation of Nonaqueous Electrolyte Solution Batteries Shown in Tables 7 to 12)

-Initial Charge and Discharge-

The produced nonaqueous electrolyte solution battery was put in a constant temperature bath at 25°C and, in this state, connected to a charge and discharge device. The battery was charged to 4.2 V at a current density of 0.38 $mA/cm^2$. After 4.2 V was maintained for one hour, the battery was discharged to 2.5 V at a current density of 0.38 $mA/cm^2$. This was defined as one charge and discharge cycle, and three cycles of charge and discharge in total were performed to stabilize the battery.

<Initial Resistance>

After the initial charge and discharge, the battery was charged to 4.2 V at 25°C and 0.38 $mA/cm^2$, and the resistance value was directly measured by impedance measurement.

The numerical values of the initial resistance shown in Examples 2-1 to 2-87 and Comparative Examples 2-1 to 2-43 shown in Tables 7 to 12 are relative values based on the numerical value of the initial resistance of Comparative Example 2-1 regarded as 100.

<Cycle Characteristic Test>

The nonaqueous electrolyte solution batteries of Examples 2-1 to 2-87 and Comparative Examples 2-1 to 2-43 shown in Tables 7 to 12 were used to perform a charge and discharge test at an ambient temperature of 25°C, and the cycle characteristics were evaluated. Each battery was charged to 4.2 V and discharged to 2.5 V, and the charge and discharge cycle was repeated at a current density of 1.9 $mA/cm^2$. Then, the degree of deterioration of the cell was evaluated with the discharge capacity retention rate after 200 cycles. The discharge capacity retention rate after 200 cycles was determined by the following equation.

(Discharge Capacity Retention Rate after 200 Cycles)

$$\text{Discharge capacity retention rate (\%)} = \text{(discharge capacity after 200 cycles/initial discharge capacity)} \times 100$$

The numerical values of the discharge capacity retention rates after 200 cycles shown in Examples 2-1 to 2-87 and Comparative Examples 2-1 to 2-43 shown in Tables 7 to 12 are relative values based on the discharge capacity retention rate after 200 cycles of Comparative Example 2-1 regarded as 100. The discharge capacity in the first cycle in the cycle characteristic test at the ambient temperature of 25°C was defined as the initial discharge capacity.

The discharge capacity retention rates after 200 cycles of Examples 2-1 to 2-87 and Comparative Examples 2-1 to 2-43 are described as "Capacity after 200 Cycles" in Tables 7 to 12.

(Resistance Value after 200 Cycles)

The nonaqueous electrolyte solution battery after the cycle characteristic test was charged to 4.2 V at 25°C and 0.38 $mA/cm^2$, and the resistance value was directly measured by impedance measurement.

The resistance values after 200 cycles of Examples 2-1 to 2-87 and Comparative Examples 2-1 to 2-43 shown in Tables 7 to 12 are relative values based on the resistance value after 200 cycles of Comparative Example 2-1 regarded as 100.

The resistance values after 200 cycles of Examples 2-1 to 2-87 and Comparative Examples 2-1 to 2-43 are described as "Resistance after 200 Cycles" in Tables 7 to 12.

[Table 1]

Table 1

| | Component (I) | | Component (II) | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |
| Comparative Example 1-3 | (1-2) | 0.5 | - | - | 103 | 99 | 101 |
| Comparative Example 1-4 | (1-2) | 1.0 | - | - | 105 | 101 | 97 |
| Comparative Example 1-5 | - | - | (2-1) | 1.0 | 97 | 100 | 94 |
| Comparative Example 1-6 | - | - | (2-2) | 0.5 | 100 | 104 | 95 |
| Comparative Example 1-7 | - | - | (2-2) | 1.0 | 100 | 105 | 94 |
| Comparative Example 1-8 | - | - | (2-2) | 1.5 | 100 | 106 | 92 |
| Example 1-1 | (1-1) | 1.0 | (2-1) | 1.0 | 80 | 136 | 73 |
| Example 1-2 | (1-1) | 1.0 | (2-2) | 0.005 | 99 | 101 | 97 |
| Example 1-3 | (1-1) | 1.0 | (2-2) | 0.015 | 92 | 115 | 88 |
| Example 1-4 | (1-1) | 1.0 | (2-2) | 0.5 | 80 | 137 | 77 |
| Example 1-5 | (1-1) | 1.0 | (2-2) | 1.0 | 80 | 139 | 75 |
| Example 1-6 | (1-1) | 1.0 | (2-2) | 1.5 | 80 | 140 | 73 |
| Example 1-7 | (1-1) | 1.0 | (2-2) | 8.0 | 87 | 135 | 79 |
| Example 1-8 | (1-1) | 1.0 | (2-2) | 11.0 | 99 | 102 | 97 |
| Example 1-9 | (1-1) | 0.005 | (2-2) | 1.0 | 99 | 105 | 94 |
| Example 1-10 | (1-1) | 0.015 | (2-2) | 1.0 | 98 | 108 | 91 |
| Example 1-11 | (1-1) | 8.0 | (2-2) | 1.0 | 88 | 133 | 81 |
| Example 1-12 | (1-1) | 10.2 | (2-2) | 1.0 | 99 | 107 | 95 |
| Example 1-13 | (1-2) | 1.0 | (2-2) | 1.0 | 80 | 138 | 76 |

[Table 2]

Table 2

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |
| Comparative Example 1-3 | (1-2) | 0.5 | - | - | 103 | 99 | 101 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-4 | (1-2) | 1.0 | - | - | 105 | 101 | 97 |
| Comparative Example 1-9 | - | - | (3-1) | 2.0 | 100 | 100 | 99 |
| Comparative Example 1-10 | - | - | (3-1) | 3.0 | 99 | 101 | 97 |
| Comparative Example 1-11 | - | - | (3-1) | 5.0 | 97 | 102 | 96 |
| Comparative Example 1-12 | - | - | (3-X) | 1.0 | 105 | 97 | 110 |
| Comparative Example 1-13 | (1-1) | 1.0 | (3-X) | 1.0 | 103 | 99 | 110 |
| Example 1-14 | (1-1) | 1.0 | (3-1) | 0.005 | 99 | 102 | 97 |
| Example 1-15 | (1-1) | 1.0 | (3-1) | 0.015 | 94 | 111 | 90 |
| Example 1-16 | (1-1) | 1.0 | (3-1) | 2.0 | 80 | 131 | 82 |
| Example 1-17 | (1-1) | 1.0 | (3-1) | 3.0 | 78 | 133 | 82 |
| Example 1-18 | (1-1) | 1.0 | (3-1) | 5.0 | 78 | 133 | 80 |
| Example 1-19 | (1-1) | 1.0 | (3-1) | 8.0 | 89 | 126 | 85 |
| Example 1-20 | (1-1) | 1.0 | (3-1) | 11.0 | 99 | 103 | 97 |
| Example 1-21 | (1-1) | 0.005 | (3-1) | 1.0 | 99 | 101 | 98 |
| Example 1-22 | (1-1) | 0.015 | (3-1) | 1.0 | 97 | 110 | 91 |
| Example 1-23 | (1-1) | 8.0 | (3-1) | 1.0 | 90 | 130 | 82 |
| Example 1-24 | (1-1) | 10.2 | (3-1) | 1.0 | 99 | 105 | 96 |
| Example 1-25 | (1-2) | 1.0 | (3-1) | 5.0 | 91 | 128 | 81 |

[Table 3]

Table 3

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-3 | (1-2) | 0.5 | - | - | 103 | 99 | 101 |
| Comparative Example 1-4 | (1-2) | 1.0 | - | - | 105 | 101 | 97 |
| Comparative Example 1-14 | - | - | (4-1) | 0.2 | 105 | 103 | 98 |
| Comparative Example 1-15 | - | - | (4-1) | 0.5 | 109 | 104 | 96 |
| Comparative Example 1-16 | - | - | (4-1) | 1.0 | 114 | 106 | 95 |
| Comparative Example 1-17 | - | - | (4-2) | 0.5 | 96 | 100 | 98 |
| Comparative Example 1-18 | - | - | (4-2) | 1.0 | 93 | 101 | 96 |
| Comparative Example 1-19 | - | - | (4-2) | 1.5 | 92 | 102 | 95 |
| Comparative Example 1-20 | - | - | (4-3) | 1.0 | 108 | 98 | 97 |
| Comparative Example 1-21 | - | - | (4-4) | 0.2 | 99 | 102 | 98 |
| Comparative Example 1-22 | - | - | (4-4) | 0.5 | 98 | 103 | 97 |
| Comparative Example 1-23 | - | - | (4-4) | 1.0 | 96 | 105 | 95 |
| Comparative Example 1-24 | - | - | (4-5) | 1.0 | 101 | 103 | 98 |
| Comparative Example 1-25 | - | - | (4-6) | 1.0 | 94 | 95 | 95 |
| Example 1-26 | (1-1) | 1.0 | (4-1) | 0.2 | 87 | 128 | 84 |
| Example 1-27 | (1-1) | 1.0 | (4-1) | 0.5 | 88 | 129 | 84 |
| Example 1-28 | (1-1) | 1.0 | (4-1) | 1.0 | 90 | 132 | 82 |
| Example 1-29 | (1-1) | 1.0 | (4-2) | 0.5 | 74 | 126 | 81 |
| Example 1-30 | (1-1) | 1.0 | (4-2) | 1.0 | 70 | 130 | 78 |
| Example 1-31 | (1-1) | 1.0 | (4-2) | 0.5 | 69 | 132 | 77 |
| Example 1-32 | (1-1) | 1.0 | (4-3) | 1.0 | 85 | 128 | 87 |
| Example 1-33 | (1-1) | 1.0 | (4-4) | 0.2 | 78 | 133 | 80 |
| Example 1-34 | (1-1) | 1.0 | (4-4) | 0.5 | 77 | 135 | 78 |
| Example 1-35 | (1-1) | 1.0 | (4-4) | 1.0 | 75 | 137 | 77 |
| Example 1-36 | (1-1) | 1.0 | (4-5) | 1.0 | 82 | 131 | 85 |
| Example 1-37 | (1-2) | 1.0 | (4-5) | 1.0 | 73 | 128 | 77 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Example 1-38 | (1-2) | 1.0 | (4-4) | 1.0 | 79 | 134 | 80 |
| Example 1-39 | (1-1) | 1.0 | (4-6) | 1.0 | 78 | 123 | 74 |
| Example 1-40 | (1-1) | 1.0 | (4-4) | 0.005 | 97 | 105 | 94 |
| Example 1-41 | (1-1) | 1.0 | (4-4) | 0.015 | 87 | 120 | 85 |
| Example 1-42 | (1-1) | 1.0 | (4-4) | 8.0 | 78 | 135 | 78 |
| Example 1-43 | (1-1) | 1.0 | (4-4) | 11.0 | 95 | 106 | 93 |
| Example 1-44 | (1-1) | 0.005 | (4-4) | 1.0 | 95 | 108 | 92 |
| Example 1-45 | (1-1) | 0.015 | (4-4) | 1.0 | 92 | 116 | 89 |
| Example 1-46 | (1-1) | 8.0 | (4-4) | 1.0 | 76 | 134 | 79 |
| Example 1-47 | (1-1) | 10.2 | (4-4) | 1.0 | 95 | 106 | 94 |

[Table 4]

Table 4

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |
| Comparative Example 1-3 | (1-2) | 0.5 | - | - | 103 | 99 | 101 |
| Comparative Example 1-4 | (1-2) | 1.0 | - | - | 105 | 101 | 97 |
| Comparative Example 1-26 | - | - | (5-1) | 0.1 | 105 | 99 | 99 |
| Comparative Example 1-27 | - | - | (5-1) | 0.3 | 109 | 100 | 100 |
| Comparative Example 1-28 | - | - | (5-1) | 0.5 | 115 | 101 | 104 |
| Comparative Example 1-29 | - | - | (5-2) | 0.3 | 113 | 100 | 108 |
| Comparative Example 1-30 | - | - | (5-3) | 0.1 | 104 | 100 | 100 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-31 | - | - | (5-3) | 0.3 | 108 | 102 | 102 |
| Comparative Example 1-32 | - | - | (5-3) | 0.5 | 113 | 103 | 104 |
| Comparative Example 1-33 | - | - | (5-X) | 0.3 | 108 | 97 | 111 |
| Comparative Example 1-34 | (1-1) | 1.0 | (5-X) | 0.3 | 105 | 99 | 107 |
| Example 1-48 | (1-1) | 1.0 | (5-1) | 0.1 | 80 | 128 | 83 |
| Example 1-49 | (1-1) | 1.0 | (5-1) | 0.3 | 84 | 130 | 85 |
| Example 1-50 | (1-1) | 1.0 | (5-1) | 0.5 | 90 | 131 | 88 |
| Example 1-51 | (1-1) | 1.0 | (5-2) | 0.3 | 88 | 130 | 86 |
| Example 1-52 | (1-1) | 1.0 | (5-3) | 0.1 | 80 | 131 | 82 |
| Example 1-53 | (1-1) | 1.0 | (5-3) | 0.3 | 85 | 133 | 83 |
| Example 1-54 | (1-1) | 1.0 | (5-3) | 0.5 | 89 | 133 | 85 |
| Example 1-55 | (1-1) | 1.0 | (5-3) | 0.005 | 99 | 102 | 97 |
| Example 1-56 | (1-1) | 1.0 | (5-3) | 0.015 | 90 | 120 | 90 |
| Example 1-57 | (1-1) | 1.0 | (5-3) | 8.0 | 96 | 129 | 91 |
| Example 1-58 | (1-1) | 1.0 | (5-3) | 11.0 | 99 | 103 | 96 |
| Example 1-59 | (1-1) | 0.005 | (5-3) | 1.0 | 99 | 101 | 99 |
| Example 1-60 | (1-1) | 0.015 | (5-3) | 1.0 | 98 | 116 | 94 |
| Example 1-61 | (1-1) | 8.0 | (5-3) | 1.0 | 94 | 127 | 92 |
| Example 1-62 | (1-1) | 10.2 | (5-3) | 1.0 | 98 | 102 | 99 |

[Table 5]

Table 5

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-3 | (1-2) | 0.5 | - | - | 103 | 99 | 101 |
| Comparative Example 1-4 | (1-2) | 1.0 | - | - | 105 | 101 | 97 |
| Comparative Example 1-35 | - | - | (6-1) | 0.5 | 100 | 103 | 98 |
| Comparative Example 1-36 | - | - | (6-1) | 1.0 | 98 | 105 | 95 |
| Comparative Example 1-37 | - | - | (6-1) | 1.5 | 97 | 106 | 94 |
| Example 1-63 | (1-1) | 1.0 | (6-1) | 0.005 | 97 | 105 | 95 |
| Example 1-64 | (1-1) | 1.0 | (6-1) | 0.015 | 88 | 124 | 86 |
| Example 1-65 | (1-1) | 1.0 | (6-1) | 0.5 | 77 | 136 | 78 |
| Example 1-66 | (1-1) | 1.0 | (6-1) | 1.0 | 76 | 139 | 77 |
| Example 1-67 | (1-1) | 1.0 | (6-1) | 1.5 | 74 | 140 | 75 |
| Example 1-68 | (1-1) | 1.0 | (6-1) | 8.0 | 80 | 135 | 79 |
| Example 1-69 | (1-1) | 1.0 | (6-1) | 11.0 | 98 | 106 | 95 |
| Example 1-70 | (1-1) | 0.005 | (6-1) | 1.0 | 97 | 106 | 94 |
| Example 1-71 | (1-1) | 0.015 | (6-1) | 1.0 | 91 | 118 | 90 |
| Example 1-72 | (1-1) | 8.0 | (6-1) | 1.0 | 84 | 132 | 81 |
| Example 1-73 | (1-1) | 10.2 | (6-1) | 1.0 | 97 | 107 | 94 |

[Table 6]

Table 6

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-1 | (1-1) | 0.5 | - | - | 100 | 100 | 100 |
| Comparative Example 1-2 | (1-1) | 1.0 | - | - | 101 | 101 | 98 |
| Comparative Example 1-3 | (1-2) | 0.5 | - | - | 103 | 99 | 101 |
| Comparative Example 1-4 | (1-2) | 1.0 | - | - | 105 | 101 | 97 |

(continued)

| | Component (I) | | Component (II) or Comparative Compound | | Initial Resistance (relative value) | Capacity after Storage at 60°C (relative value) | Resistance after Storage at 60°C (relative value) |
|---|---|---|---|---|---|---|---|
| | Type | Content [% by mass] | Type | Content [% by mass] | | | |
| Comparative Example 1-38 | - | - | (7-1) | 0.2 | 104 | 98 | 107 |
| Comparative Example 1-39 | - | - | (7-1) | 0.5 | 104 | 100 | 105 |
| Comparative Example 1-40 | - | - | (7-1) | 1.0 | 105 | 102 | 102 |
| Comparative Example 1-41 | - | - | (7-2) | 0.2 | 108 | 101 | 108 |
| Comparative Example 1-42 | - | - | (7-2) | 0.5 | 110 | 103 | 107 |
| Comparative Example 1-43 | - | - | (7-2) | 1.0 | 115 | 106 | 106 |
| Example 1-74 | (1-1) | 1.0 | (7-1) | 0.2 | 77 | 125 | 86 |
| Example 1-75 | (1-1) | 1.0 | (7-1) | 0.5 | 77 | 128 | 85 |
| Example 1-76 | (1-1) | 1.0 | (7-1) | 1.0 | 78 | 130 | 83 |
| Example 1-77 | (1-1) | 1.0 | (7-2) | 0.2 | 83 | 138 | 93 |
| Example 1-78 | (1-1) | 1.0 | (7-2) | 0.5 | 84 | 136 | 93 |
| Example 1-79 | (1-1) | 1.0 | (7-2) | 1.0 | 89 | 132 | 92 |
| Example 1-80 | (1-1) | 1.0 | (7-2) | 0.005 | 99 | 103 | 97 |
| Example 1-81 | (1-1) | 1.0 | (7-2) | 0.015 | 90 | 111 | 94 |
| Example 1-82 | (1-1) | 1.0 | (7-2) | 8.0 | 95 | 120 | 94 |
| Example 1-83 | (1-1) | 1.0 | (7-2) | 11.0 | 98 | 104 | 97 |
| Example 1-84 | (1-1) | 0.005 | (7-2) | 1.0 | 99 | 107 | 98 |
| Example 1-85 | (1-1) | 0.015 | (7-2) | 1.0 | 97 | 110 | 95 |
| Example 1-86 | (1-1) | 8.0 | (7-2) | 1.0 | 96 | 120 | 95 |
| Example 1-87 | (1-1) | 10.2 | (7-2) | 1.0 | 99 | 108 | 97 |

[Table 7]

Table 7

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | | 100 | 100 | 100 |

(continued)

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-2 | (1-1) | 1.0 | - | - | FEC (5.0% by mass) VC (2.0% by mass) | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-5 | - | - | (2-2) | 1.0 | | 101 | 99 | 108 |
| Comparative Example 2-6 | - | - | (2-2) | 0.5 | | 101 | 98 | 110 |
| Comparative Example 2-7 | - | - | (2-2) | 1.5 | | 101 | 99 | 107 |
| Comparative Example 2-8 | - | - | (2-1) | 1.0 | | 98 | 97 | 98 |
| Example 2-1 | (1-1) | 1.0 | (2-2) | 1.0 | | 79 | 146 | 79 |
| Example 2-2 | (1-1) | 1.0 | (2-2) | 0.5 | | 79 | 144 | 81 |
| Example 2-3 | (1-1) | 1.0 | (2-2) | 1.5 | | 80 | 147 | 78 |
| Example 2-4 | (1-2) | 1.0 | (2-2) | 1.0 | | 87 | 145 | 76 |
| Example 2-5 | (1-1) | 1.0 | (2-1) | 1.0 | | 81 | 143 | 70 |
| Example 2-6 | (1-1) | 1.0 | (2-1) | 0.005 | | 98 | 103 | 94 |
| Example 2-7 | (1-1) | 1.0 | (2-1) | 0.015 | | 90 | 116 | 87 |
| Example 2-8 | (1-1) | 1.0 | (2-1) | 8.0 | | 83 | 141 | 81 |
| Example 2-9 | (1-1) | 1.0 | (2-1) | 11.0 | | 98 | 104 | 93 |
| Example 2-10 | (1-1) | 0.005 | (2-1) | 1.0 | | 97 | 101 | 96 |
| Example 2-11 | (1-1) | 0.015 | (2-1) | 1.0 | | 92 | 111 | 90 |
| Example 2-12 | (1-1) | 8.0 | (2-1) | 1.0 | | 84 | 138 | 81 |
| Example 2-13 | (1-1) | 10.2 | (2-1) | 1.0 | | 97 | 102 | 95 |

[Table 8]

Table 8

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | FEC (5.0% by mass) VC (2.0% by mass) | 100 | 100 | 100 |
| Comparative Example 2-2 | (1-1) | 1.0 | - | - | | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-9 | - | - | (3-1) | 5.0 | | 98 | 98 | 108 |
| Comparative Example 2-10 | - | - | (3-1) | 3.0 | | 98 | 98 | 108 |
| Comparative Example 2-11 | - | - | (3-1) | 2.0 | | 98 | 98 | 109 |
| Comparative Example 2-12 | - | - | (3-X) | 1.0 | | 105 | 97 | 120 |
| Comparative Example 2-13 | (1-1) | 1.0 | (3-X) | 1.0 | | 102 | 100 | 115 |
| Example 2-14 | (1-1) | 1.0 | (3-1) | 0.005 | | 99 | 102 | 95 |
| Example 2-15 | (1-1) | 1.0 | (3-1) | 0.015 | | 91 | 108 | 91 |
| Example 2-16 | (1-1) | 1.0 | (3-1) | 2.0 | | 80 | 133 | 83 |
| Example 2-17 | (1-1) | 1.0 | (3-1) | 3.0 | | 79 | 133 | 82 |
| Example 2-18 | (1-1) | 1.0 | (3-1) | 5.0 | | 78 | 135 | 81 |
| Example 2-19 | (1-1) | 1.0 | (3-1) | 8.0 | | 80 | 132 | 82 |
| Example 2-20 | (1-1) | 1.0 | (3-1) | 11.0 | | 96 | 110 | 93 |
| Example 2-21 | (1-1) | 0.005 | (3-1) | 1.0 | | 97 | 101 | 95 |
| Example 2-22 | (1-1) | 0.015 | (3-1) | 1.0 | | 95 | 106 | 91 |
| Example 2-23 | (1-1) | 8.0 | (3-1) | 1.0 | | 84 | 129 | 84 |
| Example 2-24 | (1-1) | 10.2 | (3-1) | 1.0 | | 96 | 102 | 94 |
| Example 2-25 | (1-2) | 1.0 | (3-1) | 5.0 | | 79 | 134 | 82 |

[Table 9]

Table 9

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | FEC (5.0% by mass) VC (2.0% by mass) | 100 | 100 | 100 |
| Comparative Example 2-2 | (1-1) | 1.0 | - | - | | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-14 | - | - | (4-1) | 0.2 | | 110 | 97 | 109 |
| Comparative Example 2-15 | - | - | (4-1) | 0.5 | | 112 | 98 | 108 |
| Comparative Example 2-16 | - | - | (4-1) | 1.0 | | 116 | 98 | 107 |
| Comparative Example 2-17 | - | - | (4-2) | 0.5 | | 97 | 94 | 110 |
| Comparative Example 2-18 | - | - | (4-2) | 1.0 | | 95 | 96 | 108 |
| Comparative Example 2-19 | - | - | (4-2) | 1.5 | | 94 | 96 | 107 |
| Comparative Example 2-20 | - | - | (4-3) | 1.0 | | 110 | 96 | 109 |
| Comparative Example 2-21 | - | - | (4-4) | 0.2 | | 98 | 97 | 107 |
| Comparative Example 2-22 | - | - | (4-4) | 0.5 | | 98 | 98 | 107 |
| Comparative Example 2-23 | - | - | (4-4) | 1.0 | | 97 | 99 | 105 |
| Comparative Example 2-24 | - | - | (4-5) | 1.0 | | 103 | 97 | 109 |
| Comparative Example 2-25 | - | - | (4-6) | 1.0 | | 96 | 81 | 104 |
| Example 2-26 | (1-1) | 1.0 | (4-1) | 0.2 | | 80 | 135 | 85 |
| Example 2-27 | (1-1) | 1.0 | (4-1) | 0.5 | | 82 | 136 | 84 |
| Example 2-28 | (1-1) | 1.0 | (4-1) | 1.0 | | 85 | 137 | 82 |
| Example 2-29 | (1-1) | 1.0 | (4-2) | 0.5 | | 77 | 138 | 79 |
| Example 2-30 | (1-1) | 1.0 | (4-2) | 1.0 | | 75 | 140 | 76 |
| Example 2-31 | (1-1) | 1.0 | (4-2) | 1.5 | | 74 | 141 | 75 |
| Example 2-32 | (1-1) | 1.0 | (4-3) | 1.0 | | 87 | 133 | 87 |
| Example 2-33 | (1-1) | 1.0 | (4-4) | 0.2 | | 78 | 140 | 79 |

(continued)

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Example 2-34 | (1-1) | 1.0 | (4-4) | 0.5 | | 78 | 142 | 78 |
| Example 2-35 | (1-1) | 1.0 | (4-4) | 1.0 | | 78 | 144 | 76 |
| Example 2-36 | (1-1) | 1.0 | (4-5) | 1.0 | | 83 | 139 | 80 |
| Example 2-37 | (1-2) | 1.0 | (4-2) | 1.0 | | 75 | 139 | 76 |
| Example 2-38 | (1-2) | 1.0 | (4-4) | 1.0 | | 80 | 143 | 76 |
| Example 2-39 | (1-1) | 1.0 | (4-6) | 1.0 | | 80 | 126 | 76 |
| Example 2-40 | (1-1) | 1.0 | (4-6) | 0.005 | | 98 | 104 | 94 |
| Example 2-41 | (1-1) | 1.0 | (4-6) | 0.015 | | 90 | 112 | 87 |
| Example 2-42 | (1-1) | 1.0 | (4-6) | 8.0 | | 82 | 124 | 77 |
| Example 2-43 | (1-1) | 1.0 | (4-6) | 11.0 | | 95 | 106 | 93 |
| Example 2-44 | (1-1) | 0.005 | (4-6) | 1.0 | | 95 | 102 | 95 |
| Example 2-45 | (1-1) | 0.015 | (4-6) | 1.0 | | 93 | 108 | 91 |
| Example 2-46 | (1-1) | 8.0 | (4-6) | 1.0 | | 83 | 122 | 78 |
| Example 2-47 | (1-1) | 10.2 | (4-6) | 1.0 | | 95 | 103 | 94 |

[Table 10]

Table 10

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | | 100 | 100 | 100 |
| Comparative Example 2-2 | (1-1) | 1.0 | - | - | | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-26 | - | - | (5-1) | 0.1 | | 109 | 94 | 108 |
| Comparative Example 2-27 | - | - | (5-1) | 0.3 | | 112 | 94 | 109 |
| Comparative Example 2-28 | - | - | (5-1) | 0.5 | | 118 | 94 | 113 |

(continued)

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-29 | - | - | (5-2) | 0.3 | FEC (5.0% by mass) VC (2.0% by mass) | 118 | 94 | 119 |
| Comparative Example 2-30 | - | - | (5-3) | 0.1 | | 109 | 94 | 108 |
| Comparative Example 2-31 | - | - | (5-3) | 0.3 | | 111 | 94 | 110 |
| Comparative Example 2-32 | - | - | (5-3) | 0.5 | | 119 | 94 | 114 |
| Comparative Example 2-33 | - | - | (5-X) | 0.3 | | 111 | 90 | 120 |
| Comparative Example 2-34 | - | - | (5-X) | 0.3 | | 108 | 96 | 115 |
| Example 2-48 | (1-1) | 1.0 | (5-1) | 0.1 | | 83 | 133 | 85 |
| Example 2-49 | (1-1) | 1.0 | (5-1) | 0.3 | | 86 | 134 | 85 |
| Example 2-50 | (1-1) | 1.0 | (5-1) | 0.5 | | 91 | 135 | 88 |
| Example 2-51 | (1-1) | 1.0 | (5-2) | 0.3 | | 93 | 135 | 85 |
| Example 2-52 | (1-1) | 1.0 | (5-3) | 0.1 | | 86 | 139 | 82 |
| Example 2-53 | (1-1) | 1.0 | (5-3) | 0.3 | | 87 | 139 | 84 |
| Example 2-54 | (1-1) | 1.0 | (5-3) | 0.5 | | 94 | 140 | 87 |
| Example 2-55 | (1-1) | 1.0 | (5-3) | 0.005 | | 99 | 102 | 94 |
| Example 2-56 | (1-1) | 1.0 | (5-3) | 0.015 | | 95 | 116 | 89 |
| Example 2-57 | (1-1) | 1.0 | (5-3) | 8.0 | | 97 | 129 | 91 |
| Example 2-58 | (1-1) | 1.0 | (5-3) | 11.0 | | 99 | 104 | 93 |
| Example 2-59 | (1-1) | 0.005 | (5-3) | 1.0 | | 99 | 102 | 94 |
| Example 2-60 | (1-1) | 0.015 | (5-3) | 1.0 | | 97 | 110 | 90 |
| Example 2-61 | (1-1) | 8.0 | (5-3) | 1.0 | | 96 | 127 | 92 |
| Example 2-62 | (1-1) | 10.2 | (5-3) | 1.0 | | 99 | 105 | 93 |

[Table 11]

Table 11

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | FEC (5.0% by mass) VC (2.0% by mass) | 100 | 100 | 100 |
| Comparative Example 2-2 | (1-1) | 1.0 | - | - | | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-35 | - | - | (6-1) | 0.5 | | 101 | 94 | 97 |
| Comparative Example 2-36 | - | - | (6-1) | 1.0 | | 100 | 96 | 98 |
| Comparative Example 2-37 | - | - | (6-1) | 1.5 | | 99 | 97 | 98 |
| Example 2-63 | (1-1) | 1.0 | (6-1) | 0.005 | | 98 | 106 | 94 |
| Example 2-64 | (1-1) | 1.0 | (6-1) | 0.015 | | 92 | 119 | 85 |
| Example 2-65 | (1-1) | 1.0 | (6-1) | 0.5 | | 81 | 138 | 77 |
| Example 2-66 | (1-1) | 1.0 | (6-1) | 1.0 | | 80 | 141 | 75 |
| Example 2-67 | (1-1) | 1.0 | (6-1) | 1.5 | | 79 | 142 | 74 |
| Example 2-68 | (1-1) | 1.0 | (6-1) | 8.0 | | 83 | 138 | 79 |
| Example 2-69 | (1-1) | 1.0 | (6-1) | 11.0 | | 98 | 107 | 93 |
| Example 2-70 | (1-1) | 0.005 | (6-1) | 1.0 | | 99 | 101 | 97 |
| Example 2-71 | (1-1) | 0.015 | (6-1) | 1.0 | | 96 | 111 | 90 |
| Example 2-72 | (1-1) | 8.0 | (6-1) | 1.0 | | 85 | 135 | 81 |
| Example 2-73 | (1-1) | 10.2 | (6-1) | 1.0 | | 98 | 103 | 96 |

[Table 12]

Table 12

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-1 | (1-1) | 0.5 | - | - | | 100 | 100 | 100 |

(continued)

| | Component (I) | | Component (II) or Comparative Compound | | Other Additive | Initial Resistance (relative value) | Capacity after 200 Cycles (relative value) | Resistance after 200 Cycles (relative value) |
|---|---|---|---|---|---|---|---|---|
| | Type | Content [% by mass] | Type | Content [% by mass] | | | | |
| Comparative Example 2-2 | (1-1) | 1.0 | - | - | FEC (5.0% by mass) VC (2.0% by mass) | 101 | 101 | 96 |
| Comparative Example 2-3 | (1-2) | 0.5 | - | - | | 104 | 100 | 105 |
| Comparative Example 2-4 | (1-2) | 1.0 | - | - | | 106 | 101 | 99 |
| Comparative Example 2-38 | - | - | (7-1) | 0.2 | | 107 | 93 | 110 |
| Comparative Example 2-39 | - | - | (7-1) | 0.5 | | 107 | 95 | 109 |
| Comparative Example 2-40 | - | - | (7-1) | 1.0 | | 108 | 97 | 106 |
| Comparative Example 2-41 | - | - | (7-2) | 0.2 | | 113 | 94 | 112 |
| Comparative Example 2-42 | - | - | (7-2) | 0.5 | | 115 | 96 | 113 |
| Comparative Example 2-43 | - | - | (7-2) | 1.0 | | 120 | 99 | 115 |
| Example 2-74 | (1-1) | 1.0 | (7-1) | 0.2 | | 85 | 133 | 84 |
| Example 2-75 | (1-1) | 1.0 | (7-1) | 0.5 | | 85 | 134 | 83 |
| Example 2-76 | (1-1) | 1.0 | (7-1) | 1.0 | | 86 | 136 | 80 |
| Example 2-77 | (1-1) | 1.0 | (7-2) | 0.2 | | 82 | 133 | 81 |
| Example 2-78 | (1-1) | 1.0 | (7-2) | 0.5 | | 84 | 135 | 82 |
| Example 2-79 | (1-1) | 1.0 | (7-2) | 1.0 | | 88 | 139 | 85 |
| Example 2-80 | (1-1) | 1.0 | (7-1) | 0.005 | | 99 | 103 | 95 |
| Example 2-81 | (1-1) | 1.0 | (7-1) | 0.015 | | 90 | 119 | 87 |
| Example 2-82 | (1-1) | 1.0 | (7-1) | 8.0 | | 94 | 130 | 84 |
| Example 2-83 | (1-1) | 1.0 | (7-1) | 11.0 | | 98 | 104 | 93 |
| Example 2-84 | (1-1) | 0.005 | (7-1) | 1.0 | | 99 | 102 | 99 |
| Example 2-85 | (1-1) | 0.015 | (7-1) | 1.0 | | 93 | 115 | 90 |
| Example 2-86 | (1-1) | 8.0 | (7-1) | 1.0 | | 95 | 128 | 86 |
| Example 2-87 | (1-1) | 10.2 | (7-1) | 1.0 | | 99 | 102 | 99 |

INDUSTRIAL APPLICABILITY

According to the present disclosure, a nonaqueous electrolyte solution and a nonaqueous electrolyte solution battery, each of which can reduce the initial resistance value of a battery, can be provided.

Although the present disclosure has been explained in detail and referring to specific embodiments, it will be apparent to a person skilled in the art that various changes and modifications can be made without departing from the spirit

and the scope of the present disclosure.

The present application is based on a Japanese Patent Application (No. 2023-123779) filed on July 28, 2023, the contents of which are incorporated herein by reference.

## Claims

1. A nonaqueous electrolyte solution, comprising:

(I) at least one sulfonic anhydride "1" represented by the following general formula (1);
(II) at least one compound selected from the group consisting of "2", "3", "4", "5", "6", and "7" below;
(III) a solute; and
(IV) a nonaqueous organic solvent:

[Chem. 1]

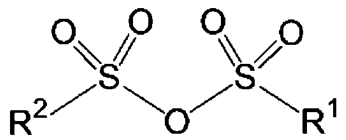

(1)

wherein in the general formula (1), $R^1$ and $R^2$ each independently represent a linear or branched-chain alkyl group having 1 to 6 carbon atoms, a linear or branched-chain alkenyl group having 2 to 10 carbon atoms, or an aryl group which may be substituted with an alkyl group having 6 to 10 carbon atoms, and any hydrogen atom of the alkyl group, the alkenyl group, and the aryl group represented by $R^1$ and $R^2$ may be substituted with a halogen atom;

the "2" is at least one compound selected from the group consisting of compounds represented by the following general formula (2-1) and general formula (2-2),

[Chem. 2]

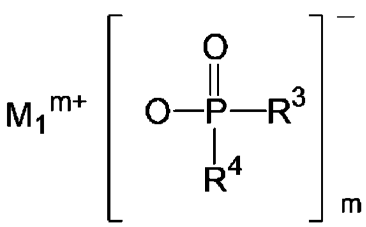

(2-1)

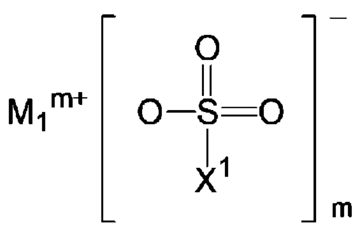

(2-2)

wherein in the general formula (2-1), $R^3$ and $R^4$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms,

a fluorine atom, an oxygen atom, and/or an unsaturated bond may be present in the organic group, and the general formula (2-1) includes at least one P-F bond,

in the general formula (2-2), $X^1$ is a fluorine atom or an organic group selected from the group consisting of a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms,

the organic group may contain at least one fluorine atom, and

an oxygen atom and/or an unsaturated bond may be present in the organic group, and

in the general formula (2-1) and the general formula (2-2), $M_1^{m+}$ is a proton, a metal cation, or an onium cation, and m represents a valence of a corresponding cation;

the "3" is at least one compound selected from the group consisting of compounds represented by the following general formula (3-1) to general formula (3-3),

[Chem. 3]

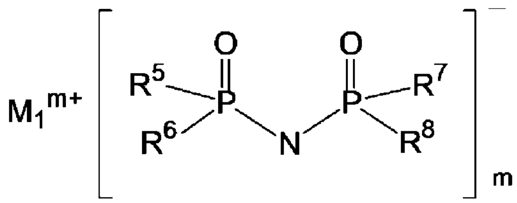

(3-1)

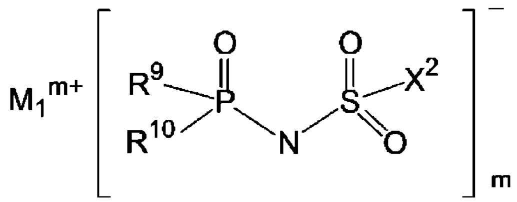

(3-2)

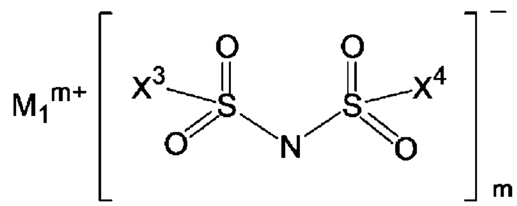

(3-3)

wherein in the general formula (3-1) to the general formula (3-3), $R^5$ to $R^{10}$ are each independently a fluorine atom or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and

a fluorine atom, an oxygen atom, and/or an unsaturated bond may be present in the organic group,

$X^2$ to $X^4$ are each independently a fluorine atom or an organic group selected from the group consisting of a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and

a fluorine atom, an oxygen atom, and/or an unsaturated bond may be present in the organic group,

the general formulae (3-1) to (3-3) include at least one P-F bond and/or S-F bond, and

$M_1^{m+}$ is a proton, a metal cation, or an onium cation, and m represents a valence of a corresponding cation;

the "4" is at least one compound selected from the group consisting of a compound represented by the following general formula (4-1) and a compound represented by the following general formula (4-2),

[Chem. 4]

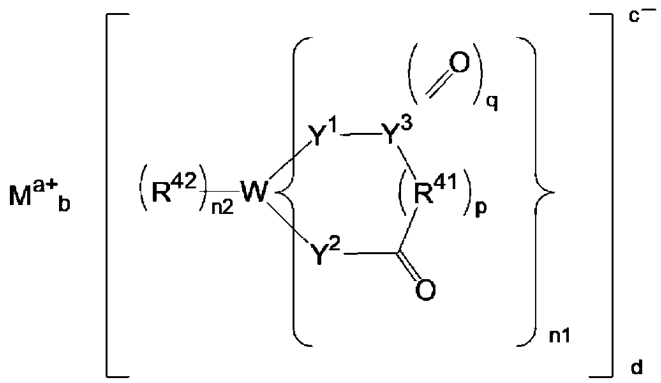

(4-1)

wherein in the general formula (4-1), W represents a boron atom, a phosphorus atom, or a silicon atom,
nl is 0 to 3,
n2 is 0 to 4,
p is 0 or 1,
$R^{41}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (wherein the groups may contain a substituent or may contain a heteroatom in the structures thereof, and when n1 is 2 or more, the n1 $R^{41}$'s may be bonded to each other),
$R^{42}$ represents a halogen atom,
$Y^1$ and $Y^2$ each independently represent an oxygen atom or a sulfur atom, and $Y^3$ represents a carbon atom or a sulfur atom,
q is 1 when $Y^3$ is a carbon atom, and q is 1 or 2 when $Y^3$ is a sulfur atom,
$M^{a+}$ represents an alkali metal cation, an alkaline earth metal cation, or an onium cation,
a represents a valence of a corresponding cation, and
a to d are each 1 or 2 and satisfy $a \times b = c \times d$,

[Chem. 5]

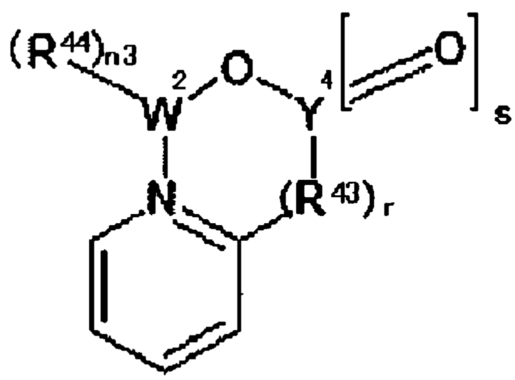

(4 − 2)

wherein in the general formula (4-2), $R^{43}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (wherein the groups may contain a substituent or may contain a heteroatom in the structures thereof),
r is 0 or 1,
$Y^4$ represents a carbon atom or a sulfur atom,
s is 1 when $Y^4$ is a carbon atom, and s is 1 or 2 when $Y^4$ is a sulfur atom,

$W^2$ represents a boron atom or a phosphorus atom,
$R^{44}$ represents a halogen atom, and
n3 is 2 when $W^2$ is a boron atom, and n3 is 4 when $W^2$ is a phosphorus atom;
the "5" is at least one compound represented by the following general formula (5),
[Chem. 6]

$$Si(R^{51})_v(R^{52})_{4-v} \qquad (5)$$

wherein in the general formula (5), $R^{51}$'s each independently represent a group having a carbon-carbon unsaturated bond,
when there are a plurality of $R^{52}$'s, $R^{52}$'s each independently represent a fluorine atom or a linear or branched alkyl group having 1 to 10 carbon atoms, the alkyl group may have at least one of a fluorine atom or an oxygen atom, and
v represents an integer of 2 to 4;
the "6" is at least one compound represented by the following general formula (6),

[Chem. 7]

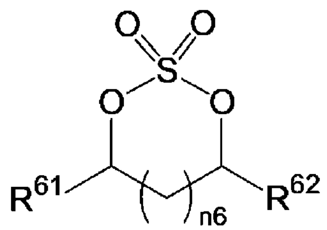

(6)

wherein in the general formula (6), $R^{61}$ and $R^{62}$ each independently represent a hydrogen atom, an alkyl group having 1 or 2 carbon atoms, a linear or branched-chain alkenyl group having 2 to 5 carbon atoms, or an aryl group which may be substituted with an alkyl group having 6 to 10 carbon atoms, and any hydrogen atom of the alkyl group, the alkenyl group, and the aryl group represented by $R^{61}$ and $R^{62}$ may be substituted with a halogen atom, and
n6 is 0 or 1; and
the "7" is at least one compound selected from the group consisting of compounds represented by the following general formula (7-1) and general formula (7-2),

[Chem. 8]

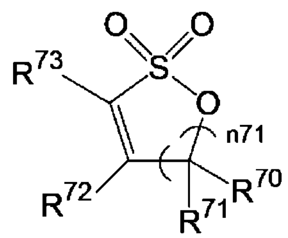

(7-1)

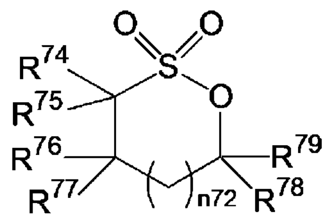

(7-2)

wherein in the general formula (7-1), $R^{70}$ to $R^{73}$ each independently represent a hydrogen atom, a fluorine atom, an alkyl group having 1 to 5 carbon atoms, or a fluoroalkyl group having 1 to 4 carbon atoms, and n71 represents an integer of 1 to 3, and
in the general formula (7-2), $R^{74}$ to $R^{79}$ each independently represent a hydrogen atom, an alkyl group having 1 to 6 carbon atoms, or a fluoroalkyl group having 1 to 4 carbon atoms, and n72 represents an integer of 0 to 2.

2. The nonaqueous electrolyte solution according to claim 1, wherein a content of the (I) with respect to a total amount of the nonaqueous electrolyte solution is 0.01% by mass to 10% by mass.

3. The nonaqueous electrolyte solution according to claim 1 or 2, wherein a content of the (II) with respect to the total

amount of the nonaqueous electrolyte solution is 0.01% by mass to 10% by mass.

4. The nonaqueous electrolyte solution according to claim 1 or 2, wherein the (I) is at least one selected from the group consisting of methanesulfonic anhydride and ethanesulfonic anhydride.

5. The nonaqueous electrolyte solution according to claim 1 or 2, wherein the "2" is at least one compound selected from the group consisting of lithium difluorophosphate, lithium fluorosulfonate, and lithium trifluoromethanesulfonate.

6. The nonaqueous electrolyte solution according to claim 1 or 2, wherein the "3" is at least one compound selected from the group consisting of lithium bis(fluorosulfonyl)imide, lithium (fluorosulfonyl)(difluorophosphoryl)imide, lithium bis(trifluoromethanesulfonyl)imide, lithium bis(difluorophosphoryl)imide, lithium bis(pentafluoroethanesulfonyl) imide, and lithium (fluorosulfonyl)(trifluoromethanesulfonyl)imide.

7. The nonaqueous electrolyte solution according to claim 1 or 2, wherein the "4" is at least one compound selected from the group consisting of lithium tetrafluoroborate, lithium bis(oxalato)borate, lithium difluoro(oxalato)borate, lithium tris(oxalato)phosphate, lithium difluorobis(oxalato)phosphate, lithium tetrafluoro(oxalato)phosphate, lithium difluoro(malonato)borate, lithium tetrafluoro(malonato)phosphate, a tetrafluoro(picolinato)phosphate, and a difluoro(picolinato)borate.

8. The nonaqueous electrolyte solution according to claim 1 or 2, wherein the "5" is at least one compound selected from the group consisting of trivinylmethylsilane, trivinylfluorosilane, and tetravinylsilane.

9. The nonaqueous electrolyte solution according to claim 1 or 2, wherein the "6" is at least one compound selected from the group consisting of 1,3,2-dioxathiolane-2,2-dioxide and 1,3,2-dioxathiane-2,2-dioxide.

10. The nonaqueous electrolyte solution according to claim 1 or 2, wherein the (III) is at least one selected from the group consisting of $LiPF_6$, $LiSbF_6$, $LiAsF_6$, $LiClO_4$, $LiAlO_2$, $LiAlCl_a$, LiCl, and LiI or at least one selected from the group consisting of $NaPF_6$, $NaSbF_6$, $NaAsF_6$, $NaClO_4$, $NaAlO_2$, $NaAlCl_4$, NaCl, and NaI.

11. The nonaqueous electrolyte solution according to claim 1 or 2, wherein the (IV) contains at least one selected from the group consisting of a cyclic ester, a chain ester, a cyclic ether, a chain ether, a sulfone compound, a sulfoxide compound, and an ionic liquid.

12. The nonaqueous electrolyte solution according to claim 11, wherein the cyclic ester is a cyclic carbonate, and the cyclic carbonate is at least one selected from the group consisting of ethylene carbonate, propylene carbonate, and fluoroethylene carbonate.

13. The nonaqueous electrolyte solution according to claim 11, wherein the chain ester is a chain carbonate, and the chain carbonate is at least one selected from the group consisting of ethyl methyl carbonate, dimethyl carbonate, diethyl carbonate, and methyl propyl carbonate.

14. A nonaqueous electrolyte solution battery, at least comprising:

a positive electrode;
a negative electrode;
a separator; and
the nonaqueous electrolyte solution according to claim 1 or 2.

## INTERNATIONAL SEARCH REPORT

International application No. **PCT/JP2024/026842**

### A. CLASSIFICATION OF SUBJECT MATTER

***H01M 10/0567***(2010.01)i; ***H01M 10/052***(2010.01)i; ***H01M 10/054***(2010.01)i; ***H01M 10/0568***(2010.01)i; ***H01M 10/0569***(2010.01)i
FI: H01M10/0567; H01M10/052; H01M10/054; H01M10/0568; H01M10/0569

According to International Patent Classification (IPC) or to both national classification and IPC

### B. FIELDS SEARCHED

Minimum documentation searched (classification system followed by classification symbols)

H01M10/0567; H01M10/052; H01M10/054; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0099688 A (SK ON CO., LTD.) 14 July 2022 (2022-07-14) examples, paragraph [0097] | 1-14 |
| A | WO 2022/158400 A1 (CENTRAL GLASS CO., LTD.) 28 July 2022 (2022-07-28) paragraph [0107], examples 3-1, 3-2, 3-3 | 1-14 |
| A | JP 2013-211224 A (MITSUBISHI CHEMICAL CORPORATION) 10 October 2013 (2013-10-10) examples 1-6 | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/026842

**Box No. III Observations where unity of invention is lacking (Continuation of item 3 of first sheet)**

This International Searching Authority found multiple inventions in this international application, as follows:

Document 1: KR 10-2022-0099688 A (SK ON CO., LTD.) 14 July 2022 (2022-07-14) examples, paragraph [0097] (Family: none)
Document 2: WO 2022/158400 A1 (CENTRAL GLASS CO., LTD.) 28 July 2022 (2022-07-28) paragraph [0107], examples 3-1, 3-2, 3-3 (Family: none)
Document 3: JP 2013-211224 A (MITSUBISHI CHEMICAL CORPORATION) 10 October 2013 (2013-10-10) examples 1-6 (Family: none)

Claims are classified into the following eleven inventions.

(Invention 1) Invention containing a compound represented by general formula (2-1) in claims 1-14

Since document 1 discloses a nonaqueous electrolyte solution containing sulfonic acid anhydride represented by the general formula (1) and a compound represented by general formula (2-1), claim 1 lacks novelty, does not involve an inventive concept in light of document 1, and thus does not have a special technical feature.

The invention containing a compound represented by general formula (2-2), general formula (3-1), general formula (3-2), general formula (3-3), general formula (4-1), general formula (4-2), general formula (5), general formula (6), general formula (7-1), or general formula (7-2) in claims 1-14 shares, with the invention containing a compound expressed by general formula (2-1) in claims 1-14, the common technical feature of a nonaqueous electrolyte solution containing at least one sulfonic acid anhydride represented by general formula (1). However, the technical feature is disclosed in documents 1-3 not to make a contribution over the prior art, and thus cannot be said to be a special technical feature. Also, there are no other same or corresponding special technical features between a compound represented by general formula (2-2), general formula (3-1), general formula (3-2), general formula (3-3), general formula (4-1), general formula (4-2), general formula (5), general formula (6), general formula (7-1), or general formula (7-2) and a compound represented by general formula (2-1). Furthermore, the invention containing a compound represented by general formula (2-1) in claims 1-14 is not substantially identical to or similarly closely related to any of the other inventions.

Therefore, the invention containing a compound represented by general formula (2-1) in claims 1-14 is classified as invention 1.

Moreover, it should be noted that claims 6-9 specify compounds of "(3)"-"(6)," but the feature in which a compound specified in "(2)" is allowed to be selected in addition to the compounds specified in "(3)"-"(6)" is described according to "(II)" of claim 1 referred to by claims 6-9.

(Invention 2) Invention containing a compound represented by general formula (2-2) in claims 1-14.

The invention containing a compound represented by general formula (2-2) in claims 1-14, with the invention classified as invention 1, the common technical feature of a nonaqueous electrolyte solution containing at least one sulfonic acid anhydride represented by general formula (1). However, the technical features do not make a contribution over the prior art in light of the disclosure of documents 1-3, and thus cannot be said to be a special technical feature. Additionally, there are no other same or corresponding special technical features between these inventions. Furthermore, the invention containing a compound represented by general formula (2-2) in claims 1-14 is not substantially identical to or similarly closely related to any of the other inventions.

Therefore, the invention containing a compound represented by general formula (2-2) in claims 1-14 cannot be classified as any of the other inventions.

Moreover, the invention containing a compound represented by general formula (2-2) in claims 1-14 has the special technical feature of a "nonaqueous electrolyte solution containing at least one sulfonic acid anhydride represented by general formula (1) as well as containing a compound represented by general formula (2-2), and is thus classified as invention 2.

The same applies hereinafter, and the invention containing a compound represented by general formula (3-1), general formula (3-2), general formula (3-3), general formula (4-1), general formula (4-2), general formula (5), general formula (6), general formula (7-1), or general formula (7-2) specified in claim 1 is classified as inventions 3-11 as follows.

(Invention 3) Invention containing a compound represented by general formula (3-1) in claims 1-14.
(Invention 4) Invention containing a compound represented by general formula (3-2) in claims 1-14.
(Invention 5) Invention containing a compound represented by general formula (3-3) in claims 1-14.

**INTERNATIONAL SEARCH REPORT**

International application No.
**PCT/JP2024/026842**

**Box No. III Observations where unity of invention is lacking (Continuation of item 3 of first sheet)**

(Invention 6) Invention containing a compound represented by general formula (4-1) in claims 1-14.
(Invention 7) Invention containing a compound represented by general formula (4-2) in claims 1-14.
(Invention 8) Invention containing a compound represented by general formula (5) in claims 1-14.
(Invention 9) Invention containing a compound represented by general formula (6) in claims 1-14.
(Invention 10) Invention containing a compound represented by general formula (7-1) in claims 1-14.
(Invention 11) Invention containing a compound represented by general formula (7-2) in claims 1-14.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Invention containing a compound represented by general formula (2-1) in claims 1-14.**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2024/026842**

| Patent document cited in search report | Publication date (day/month/year) | Patent family member(s) | Publication date (day/month/year) |
| --- | --- | --- | --- |
| KR 10-2022-0099688 A | 14 July 2022 | (Family: none) | |
| WO 2022/158400 A1 | 28 July 2022 | (Family: none) | |
| JP 2013-211224 A | 10 October 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3760539 B
- JP 3497812 B
- JP 4847675 B
- JP 3439085 B
- JP 5353923 B
- JP 3760540 B
- JP 4190162 B
- JP 3722685 B
- WO 2016002774 A1
- JP 2023123779 A